# EUROPÄISCHE PATENTSCHRIFT

(11) **EP 3 645 149 B1**
(45) Veröffentlichungstag und Bekanntmachung des Hinweises auf die Patenterteilung: **14.04.2021**
(21) Anmeldenummer: 18734792.7
(22) Anmeldetag: 26.06.2018
(51) Int. Cl.: B01F 3/08, B01F 5/04, C01B 17/69

(54) **VERTEILER FÜR EIN FLUID**
DISTRIBUTOR FOR A FLUID
DISTRIBUTEUR DE FLUIDE

(30) Priorität: 27.06.2017 DE 202017103845 U
(43) Veröffentlichungstag der Anmeldung: 06.05.2020
(73) Patentinhaber: Hugo Petersen GmbH, 65203 Wiesbaden (DE)
(72) Erfinder: FANI YAZDI, Sayyed Ahmad, 65189 Wiesbaden (DE); SCHULZE, Axel, 65510 Idstein/Heftrich (DE)
(74) Vertreter: Tesch, Sabine
(86) Internationale Anmeldenummer: PCT/EP2018/067046
(87) Internationale Veröffentlichungsnummer: WO 2019/002253

(56) Entgegenhaltungen:
- EP-A1- 1 975 381
- EP-A2- 0 761 298
- DE-A1-102010 007 303
- FR-A- 1 372 655
- US-A- 3 702 619
- US-A- 5 388 906
- US-A- 6 132 079
- US-A1- 2005 056 313
- US-A1- 2014 053 538
- US-A1- 2015 299 581

## Beschreibung

Die Erfindung betrifft einen Verteiler zum Einbringen eines ersten Fluids in ein zweites Fluid, insbesondere zum Einbringen einer ersten Flüssigkeit in eine zweite Flüssigkeit sowie ein Verfahren zum Mischen zweier Fluide, insbesondere zweier Flüssigkeiten, sowie die Verwendung eines solchen Verfahrens.

Die Erfindung betrifft insbesondere das Mischen einer Säure oder einer Lauge mit Wasser, um die Konzentration der Säure oder der Lauge einzustellen. Insbesondere betrifft die Erfindung die Einstellung der Konzentration von Schwefelsäure. Es ist aus der deutschen Patentanmeldung DE 10 2010 007 303 A1 bekannt, die Säure oder Lauge in einer Mischkammer mit einem Medium zum Einstellen der Konzentration zu vermischen. US 3 702 619 offenbart einen Verteiler entsprechend dem Oberbegriff des Anspruchs 1.

Bei der Schwefelsäureherstellung wird Schwefeldioxid (SO2) in einem Konverter mit Hilfe eines Katalysators zu Schwefeltrioxid (SO3) umgesetzt. Das gewonnene Schwefeltrioxid wird dann in konzentrierter Schwefelsäure (H2SO4) in einem Absorber absorbiert. Die resultierende hochkonzentrierte Schwefelsäure kann teilweise nach Verdünnung mit Wasser zur erneuten Absorption wieder zu dem Absorber zurückgeführt werden.

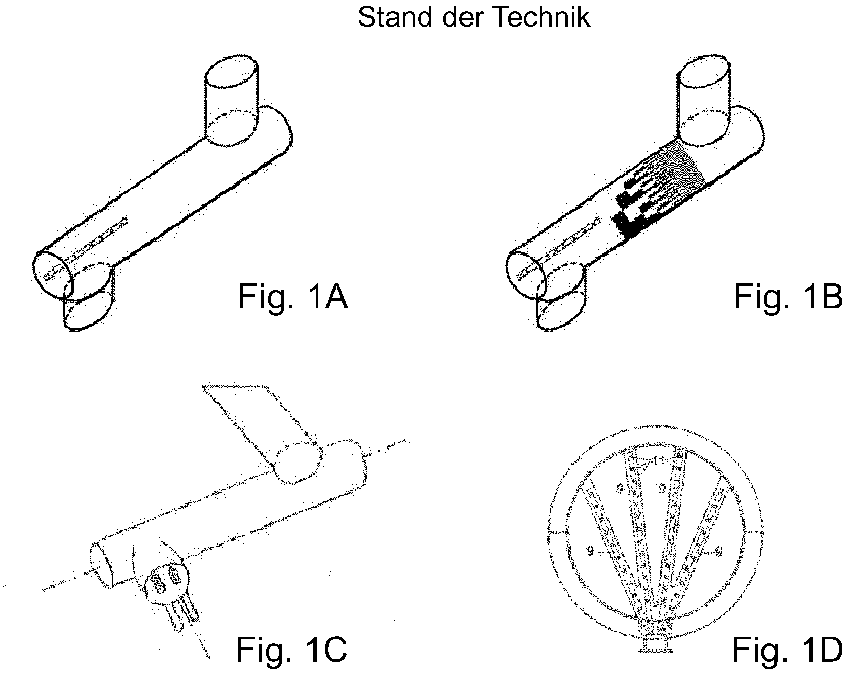

Um die Säurekonzentration für den Absorberkreislauf einzustellen, werden bislang Vorrichtungen wie die in Figur 1A dargestellte verwendet. Dabei wird konzentrierte Schwefelsäure durch eine Zufuhrleitung senkrecht von unten über einen Einlass einer Mischkammer zugeführt, die im Wesentlichen im rechten Winkel zur Zufuhrleitung steht. Durch das dem Einlass benachbarte Ende der Mischkammer wird über eine Lanze mit Düsenöffnungen Wasser dem Schwefelsäurestrom zur Einstellung der Konzentration, das heißt zur Verdünnung der Schwefelsäure, zugemischt. In der Mischkammer werden konzentrierte Schwefelsäure und Wasser vermischt und die in der Konzentration eingestellte Schwefelsäure über einen Auslass am der Zufuhrleitung gegenüberliegenden Ende durch eine Abfuhrleitung entnommen.

Zur Durchmischung von konzentrierter Schwefelsäure und Wasser können in der Mischkammer noch statische Mischeinrichtungen eingebaut sein. Eine derartige Mischkammer ist in Figur 1B gezeigt. Die mit dem Einbau des statischen Mischers verbundene Verringerung des durchströmten Querschnitts erhöht den Druckverlust in der Mischkammer. Zudem erhöht der statische Mischer die Investitionskosten.

Des Weiteren ist es aus der deutschen Patentanmeldung DE 10 2010 007 303 A1 bekannt, das Medium zum Einstellen der Konzentration, insbesondere Wasser, der Säure oder Lauge vor dem Einlass zur Mischkammer aufzugeben wird und den Säurestrom oder Laugenstrom und den Strom des Mediums anschließend um vorzugsweise 90° umzulenken. Durch das Aufgeben des Mediums noch vor der Mischkammer und die anschließende Umlenkung der Ströme am Eingang der Mischkammer soll eine intensive Durchmischung erreicht werden, die zu einer deutlich homogeneren Konzentrationsverteilung in der Säure oder Lauge als bei den oben beschriebenen Verfahren führen soll.

Mit einem Einlass einer Mischkammer ist eine Zufuhrleitung für konzentrierte Schwefelsäure verbunden. Die Mischkammer steht im Wesentlichen im rechten Winkel zur Zufuhrleitung Zwischen dem Ende der Zufuhrleitung und dem Einlass der Mischkammer ist gemäß Figur 1C eine Düsenvorrichtung in Form mehrerer Düsenrohre angebracht, über die Wasser in den Schwefelsäurestrom eingedüst wird. Anstelle eines oder mehrerer Düsenrohre, wie sie in Figur 1C abgebildet sind, kann die Düsenvorrichtung auch gemäß Figur 1D als ringförmiger Flansch (Düsenring) ausgebildet sein, der in seinen Maßen auf die Verbindungsstelle zwischen Zufuhrleitung und Einlass der Mischkammer abgestimmt ist. In dem Düsenring sind fächerförmig vier Hohlstege angeordnet. An der Basis der fächerförmigen Anordnung sind die Hohlstege durch den Düsenring hindurch mit einem Anschluss für die Wasserzufuhr verbunden.

Alle diese Mischverfahren arbeiten mit einer separaten, rechtwinklig zum Strömungsweg der zu- und abgeführten Schwefelsäure angeordneten Mischkammer. Zudem sind teilweise die Mischergebnisse nicht zufriedenstellend. Beispielsweise ist mit einer inhomogenen Mischung aus hochkonzentrierter Schwefelsäure und Wasser ein erhöhtes Korrosionsrisiko verbunden. Die Materialien kommen bei inhomogener Mischung auch mit sogenannter Dünnsäure in Kontakt. In der Säureleitung sollen aber keine Wassersträhnen beziehungsweise keine Dünnsäure ankommen, welche eine lokale Korrosion verursachen können.

Es ergibt sich damit eine Aufgabe der Erfindung, eine konstruktive einfache Möglichkeit zum Einbringen eines ersten Fluids in ein zweites Fluid zu schaffen. Es ist dabei eine weitere Aufgabe der Erfindung, den Druckverlust in dem Anlagenbereich, in welchem der Mischvorgang abläuft, möglichst gering zu halten. Insbesondere ist es eine Aufgabe der Erfindung, eine möglichst homogene Mischung eines Fluids mit einem anderen Fluid innerhalb eines möglichst kleinen Volumens und bei geringen Investitionskosten realisieren zu können. Für eine Anwendung beispielsweise im Rahmen der Schwefelsäuresynthese soll dabei eine derartige Durchmischung von Wasser und Säure erreicht werden, dass möglichst keine Fluidbereiche von Wasser oder Dünnsäure mit den fluidführenden Bauteilen in Kontakt kommen.

Diese Aufgaben werden gelöst durch einen Verteiler gemäß Anspruch 1. Vorteilhafte Weiterbildungen sind Gegenstand der Unteransprüche.

Die Erfindung stellt einen Verteiler zum Einbringen eines ersten Fluids in ein zweites Fluid zur Verfügung, insbesondere zum Einbringen einer ersten Flüssigkeit in eine zweite Flüssigkeit, welcher eine erste Begrenzungsfläche und eine von der ersten Begrenzungsfläche beabstandete zweite Begrenzungsfläche aufweist, welche im Wesentlichen parallel zu der ersten Begrenzungsfläche verläuft, wobei durch die Begrenzungsflächen mittig im Wesentlichen senkrecht zu zumindest einer der Begrenzungsflächen eine Zentrumsachse verläuft und der Verteiler zumindest einen Einlass und zumindest zwei Austrittsöffnungen für das erste Fluid aufweist sowie zumindest einen Kanal umfasst, welcher mit dem Einlass und den Austrittsöffnungen verbunden und zwischen der ersten und der zweiten Begrenzungsfläche angeordnet ist, wobei die Austrittsöffnungen derart angeordnet sind, dass das erste Fluid im Betrieb gleichmäßig verteilt konzentrisch um die Zentrumsachse aus dem Verteiler in das zweite Fluid austritt, wobei der Verteiler eine Durchtrittsöffnung oder mehrere Durchtrittsöffnungen für das zweite Fluid umfasst, welche derart dimensioniert und angeordnet ist oder sind, dass das zweite Fluid im Betrieb gleichmäßig verteilt konzentrisch um die Zentrumsachse strömt.

Auf diese Weise schafft die Erfindung mit einem konstruktiv einfachen Aufbau einen Verteiler zum Einbringen eines Fluids in ein anderes Fluid. Des Weiteren ist der erfindungsgemäße Verteiler kostengünstig in der Fertigung sowie im Einbau in bestehende Anlagen, insbesondere in Rohrleitungen. Dazu kann der Verteiler vorzugsweise dazu ausgebildet sein, mittels einer Flanschverbindung in eine Rohrleitung eingebaut zu werden. Die Erfindung ermöglicht es insbesondere, auf eine separate Mischkammer und eine Umlenkung der Strömung der gemischten Fluide um 90° bei der Überführung der Mischung aus der Mischkammer in die Abfuhrleitung zu verzichten. Aufgrund der im Vergleich mit einer Mischkammer deutlich kleineren Abmessungen des Verteilers in Strömungsrichtung des zweiten Fluids kann damit auch der gesamte Druckverlust durch das Mischen gering gehalten werden.

In einer bevorzugten Ausführungsform weist der erfindungsgemäße Verteiler zumindest einen streifenförmigen, insbesondere kreisringförmigen Austrittsbereich auf, in welchem Austrittsöffnungen für das erste Fluid positioniert sind, und zumindest einen Distanzbereich, wobei der Distanzbereich in einer Richtung gesehen von der Zentrumsachse aus dem zumindest einen Austrittsbereich nachgeordnet positioniert ist. In einer vorteilhaften konstruktiv einfachen Weiterbildung ist der Distanzbereich ein integraler Bestandteil des Verteilers und insbesondere einstückig mit diesem ausgebildet. Der Distanzbereich kann im Rahmen der Erfindung dabei streifenförmig, insbesondere kreisringförmig ausgebildet sein.

Der Distanzbereich gemäß der Erfindung ermöglicht eine weitere Verbesserung des Korrosionsschutzes. Dies ist beispielsweise beim Einstellen der Säurekonzentration für den Absorberkreislauf bei der Schwefelsäuresynthese von großer Bedeutung.

Mit Hilfe des Distanzbereiches am erfindungsgemäßen Verteiler wird das aus den Austrittsöffnungen austretende erste Fluid in einem durch die Bemaßung des Distanzbereiches vorgebbaren Abstand von der Rohrwandung in das zweite Fluid zugegeben. Die Erfindung ermöglicht damit im Betrieb einer Anlage mit dem erfindungsgemäßen Verteiler einen permanenten Kontakt der Innenwand der Anlage, in die der Verteiler eingebaut ist, also beispielsweise einer Rohrleitung, mit dem zweiten Fluid. Im Rahmen der Schwefelsäuresynthese bedeutet dies, dass die Zugabe von Wasser als erstem Fluid zu hochkonzentrierter Schwefelsäure als zweitem Fluid immer in einem solchen Abstand von der Rohrwand erfolgt, dass diese Wand nicht mit Dünnsäure in Kontakt kommt. Es erfolgt mit Hilfe der Erfindung daher immer eine Spülung der Wand, so wird verhindert, dass die Wand korrodiert.

Dadurch wird ein Verzicht auf eine separate, rechtwinklig zum Strömungsweg der zu- und abgeführten Schwefelsäure angeordnete Mischkammer ermöglicht. Die Erfindung betrifft daher auch eine Anlage beziehungsweise eine Anlagenkomponente zum Einbringen eines ersten Fluids in ein zweites Fluid, insbesondere zum Einbringen von Wasser in hochkonzentrierte Schwefelsäure, mit einer geraden Rohrleitung mit einem oben beschriebenen Verteiler und ohne eine separate, insbesondere rechtwinklig zum Strömungsweg der zu- und abgeführten Schwefelsäure angeordnete Mischkammer.

Im Unterschied zur Erfindung erstrecken sich gemäß einer in DE 10 2010 007 303 A1 vorgestellten Ausführungsform die Wasserzulaufvorrichtungen fächerartig über die durchströmte Fläche vor der Mischkammer, was zu einer ungleichmäßigen Strömung in Bezug auf die Zentrumsachse und damit zu Belastungen der Bauteile führt.

Der Verteiler kann zum einen unter Ausbildung einer gemeinsamen Flanschverbindung in eine Rohrleitung zwischen zwei Rohren befestigt sein. In einer weiteren Ausführungsform bietet die Erfindung die Möglichkeit, den Verteiler als eine Art Steckscheibe auszubilden. Der Verteiler weist dann keine Löcher zur Ausbildung einer Flanschverbindung auf. Der Verteiler wird dann wie eine Dichtung zwischen den Rohren positioniert, ohne mit diesen verschraubt zu sein. Der Verteiler ist sozusagen als Steckscheibe zwischen den Flanschen der Rohre eingeklemmt. Damit bietet die Erfindung eine konstruktiv im Vergleich zu einer Flanschverbindung deutlich einfacherer Möglichkeit für die Fertigung und den Einbau des Verteilers.

In einer Weiterbildung der Erfindung ist vorgesehen, dass der Verteiler zumindest zwei Auslässe umfasst, wobei ein Auslass den Kanal mit zumindest einer Austrittsöffnung verbindet. Ein Auslass ist ein Durchgang, welcher sich zwischen dem Kanal und mindestens einer Austrittsöffnung erstreckt. Der Auslass mündet über die Austrittsöffnung in die Begrenzungsfläche des Verteilers.

Über die Dimensionierung der geometrischen Parameter des Auslasses und der Austrittsöffnung lässt sich die Mischcharakteristik beim Einbringen des ersten Fluids in das zweite Fluid beeinflussen, indem diese im Hinblick auf das Strömungsprofil des ersten Fluids beim Austritt aus dem Verteiler und Eintritt in die zweite Flüssigkeit dimensioniert werden. Derartige Parameter sind beispielsweise der Durchmesser und die Länge des Auslasses zwischen Kanal und Austrittsöffnung, der Durchmesser der Austrittsöffnung sowie die Gestaltung des Profils des Randes der Austrittsöffnung. Der Rand kann beispielsweise abgerundet ausgebildet sein oder mit einer Kante zum Erreichen eines Strömungsabrisses des ersten Fluids versehen sein.

Austrittsöffnung und Auslass können dabei insbesondere einen durchströmten Querschnitt haben, welcher im Hinblick auf die Strömungsverhältnisse beim Ausströmen des ersten Fluids in das zweite Fluid beispielsweise auch im Hinblick auf die Form und die Abmessungen des Querschnitts sowie eine Veränderung der Abmessungen des Querschnitts im Verlauf des Auslasses vom Kanal hin zur Austrittsöffnung dimensioniert ist.

In einer konstruktiv einfachen Variante ist gemäß der Erfindung vorgesehen, dass sich zumindest eine Durchtrittsöffnung in ihrer von zweitem Fluid durchströmten Richtung parallel zur Zentrumsachse erstreckt.

So ist der Verteiler als Platte ausgebildet und mit Durchgängen versehen, die beispielsweise im Wesentlichen senkrecht durch die Begrenzungsflächen mittels spanabhebender Bearbeitung eingebracht sind. Die Verteilerplatte kann dazu symmetrisch zu einer Ebene, welche mittig parallel zu den Begrenzungsflächen verläuft, aus zwei Hälften aufgebaut sein, die sozusagen aufeinander geklappt und beispielsweise lösbar miteinander verbunden den Verteiler als Platte mit ihrer inneren Struktur in Form des Kanals mit Einlass und Austrittsöffnungen definieren.

Weitere vorteilhafte Weiterbildungen der Erfindung werden unter Bezugnahme auf die beigefügten Figuren erläutert. Die Erfindung stellt des Weiteren ein Verfahren zum Mischen eines ersten Fluids, nämlich Wasser, mit einem zweiten Fluid, nämlich Schwefelsäure, zur Verfügung, wobei das zweite Fluid entlang einer Strömungsrichtung strömt, welche eine Zentrumsachse definiert, und das erste Fluid parallel zur Zentrumsachse in das strömende zweite Fluid durch einen erfindungsgemässen Verteiler zugegeben wird, wobei eine Mischung aus dem ersten und dem zweiten Fluid entsteht. Als besonders Vorteilhaft bei der Verwendung des erfindungsgemäßen Verteilers hat es sich herausgestellt, diesen in ein vertikal stehendes Rohr einzubauen, das von unten nach oben durchströmt wird. Bei der Schwefelsäuresynthese wird dabei bevorzugt der Verteiler mit nach oben zeigenden Austrittsöffnungen eingebaut. Aufgrund seiner geringeren Dichte bewegt sich das Wasser in der Schwefelsäure nach oben, wobei es mit Hilfe des Verteilers als dynamischen Mischers in die Säure gemischt wird.

Durch die Zugabe direkt in das strömende zweite Fluid wird eine besonders effiziente und schnelle Mischung der Fluide ermöglicht. Insbesondere kann auf eine separate Mischkammer verzichtet werden. Dabei erlaubt die Erfindung, je nach Anforderungen des Mischprozesses und gegebenenfalls der Temperaturführung sowie möglicher Reaktionen zwischen den Fluiden F1 und F2 beziehungsweise ihren Bestandteilen, das erste Fluid dem zweiten Fluid entweder im Wesentlichen in derselben Strömungsrichtung oder im Wesentlichen in entgegengesetzter Strömungsrichtung zuzugeben.

Besonders vorteilhaft hat sich die Verwendung einer Vorrichtung und/oder eines Verfahrens gemäß der Erfindung bei der Schwefelsäureherstellung erwiesen. Bei der Mischung der Säure mit Wasser wird Wärme freigesetzt. Daher kann Wasser verdampfen, so dass es beim Einmischen des Wassers in die Schwefelsäure zu örtlichen Explosionen gefolgt von Implosionen kommen kann. Mit Hilfe der Erfindung wird dabei vermieden, dass entstehender Wasserdampf aufgrund der geringeren Dichte sich von der flüssigen Mischung absetzen kann. Durch die Anordnung des Verteilers direkt in der Strömung wird zudem die mechanische Belastung der Bauteile dadurch verringert, dass sich entstehende Druckschwankungen infolge der Strömungsrichtungen der beteiligten Fluidelemente reduzieren beziehungsweise minimiert werden.

Die Erfindung wird nachfolgend unter Bezugnahme auf die beigefügten Zeichnungen auch anhand von Ausführungsbeispielen näher erläutert. Gleiche und ähnliche Bauteile sind dabei mit gleichen Bezugszeichen versehen, wobei die Merkmale der verschiedenen Ausführungsbeispiele miteinander kombiniert werden können. Es zeigen:
- Figur 1: schematische Darstellungen 1A, 1B, 1C und 1D von Mischkammern gemäß dem Stand der Technik,
- Figur 2: eine schematische perspektivische Darstellung eines Verteilers gemäß einer ersten Ausführungsform, wobei der Verteiler über eine Flanschverbindung in eine Rohrleitung eingebaut ist,
- Figur 3: eine schematische perspektivische Darstellung eines Verteilers gemäß einer zweiten Ausführungsform, wobei der Verteiler über eine Flanschverbindung in eine Rohrleitung eingebaut ist,
- Figur 4: eine schematische perspektivische Darstellung eines Ausschnitts aus einem Verteiler gemäß einer dritten Ausführungsform, wobei ein Längsschnitt durch die Zentrumsachse durch die Durchtrittsöffnungen für das zweite Fluid gelegt ist,
- Figur 5: eine schematische perspektivische Darstellung eines Ausschnitts aus einem Verteiler gemäß der dritten Ausführungsform in einer Rückansicht des in Figur 4 dargestellten Ausschnitts, wobei ein Längsschnitt durch die Zentrumsachse durch den Einlass und den Kanal für das erste Fluid gelegt ist,
- Figur 6: eine schematische Darstellung in Frontalansicht einer Rohrleitung mit einem Verteiler gemäß einer weiteren Ausführungsform, als Steckscheibe zwischen zwei Flanschen geklemmt.
- Figur 7: eine schematische Darstellung einer Rohrleitung mit einem Verteiler gemäß einer weiteren Ausführungsform in einer gegenüber Figur 6 um 90° im Uhrzeigersinn um die Zentrumsachse gedrehten Frontalansicht,
- Figur 8: eine schematische offene und perspektivische Darstellung eines Ausschnitts aus einem Teil des Kanals und des ihn umgebenden Verteilersegments gemäß einer weiteren Ausführungsform,
- Figur 9: eine schematische offene und perspektivische Darstellung eines Ausschnitts aus einem Teil des Kanals und des ihn umgebenden Verteilersegments gemäß einer weiteren Ausführungsform,
- Figur 10: schematische Darstellungen 10A, 10B und 10C von Längsschnitten durch einen Ausschnitt eines Verteilers in einer Schnittebene parallel zur Zentrumsachse mit unterschiedlichen Innenprofilen des Kanals und der Auslässe,
- Figur 11: eine schematische Aufsicht auf einen Verteiler gemäß einer vierten Ausführungsform,
- Figur 12: eine schematische Aufsicht auf einen Verteiler gemäß einer Ausführungsform der Erfindung,
- Figur 13: eine schematische offene und perspektivische Darstellung eines Ausschnitts aus einem Teil des Kanals und des ihn umgebenden Verteilersegments gemäß einer weiteren Ausführungsform,
- Figur 14: eine schematische offene und perspektivische Darstellung eines Ausschnitts aus einem Teil des Kanals und des ihn umgebenden Verteilersegments gemäß einer weiteren Ausführungsform,
- Figur 15: eine schematische offene und perspektivische Darstellung eines Ausschnitts aus einem Teil des Kanals und des ihn umgebenden Verteilersegments gemäß einer weiteren Ausführungsform,
- Figur 16: schematische Darstellungen 16A bis 16F von Längsschnitten durch einen Ausschnitt eines Verteilers in einer Schnittebene parallel zur Zentrumsachse unterschiedlichen Außenprofilen des den Kanal umgebenden Verteilersegments,

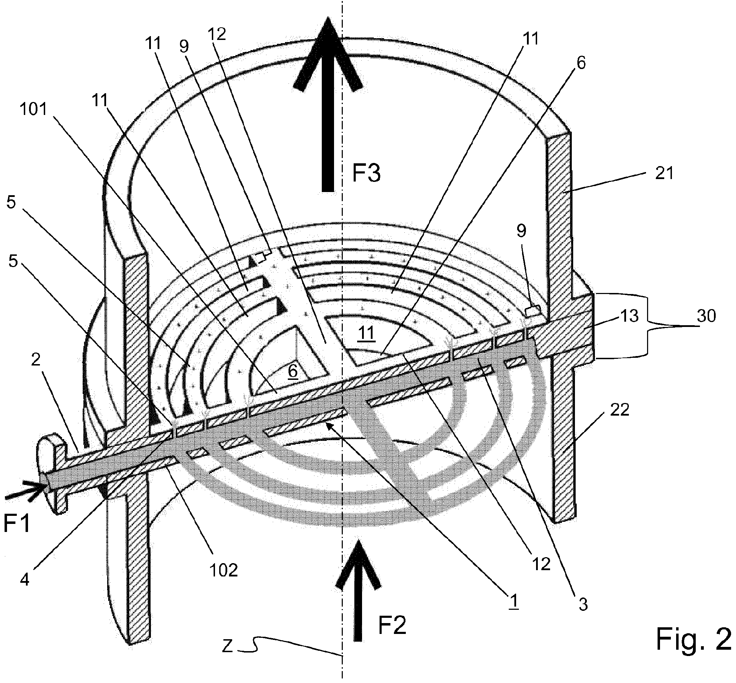

In Figur 2 ist ein Verteiler 1 zum Einbringen eines ersten Fluids F1 in ein zweites Fluid F2 dargestellt. Mit einem derartigen Verteiler 1 kann insbesondere eine F1, beispielsweise Wasser, in eine zweite Flüssigkeit F2, beispielsweise Schwefelsäure, eingebracht werden. Der Verteiler 1 weist eine erste Begrenzungsfläche 101 und eine von der ersten Begrenzungsfläche 101 beabstandete zweite Begrenzungsfläche 102 auf. Die zweite Begrenzungsfläche 102 verläuft im Wesentlichen parallel zu der ersten Begrenzungsfläche 101. Durch die Begrenzungsflächen 101, 102 verläuft mittig und im Wesentlichen senkrecht zu zumindest einer der Begrenzungsflächen eine Zentrumsachse Z. Der Verteiler 1 weist zumindest einen Einlass 2 und zumindest zwei Austrittsöffnungen 5 für das erste Fluid F1 auf und umfasst zumindest einen Kanal 3, welcher mit dem Einlass 2 und den Austrittsöffnungen 5 verbunden und zwischen der ersten und der zweiten Begrenzungsfläche 101, 102 angeordnet ist. Im gezeigten Ausführungsbeispiel liegen die Austrittsöffnungen 5 in der oberen Begrenzungsfläche 101. Die Austrittsöffnungen 5 sind derart gleichmäßig - insbesondere über die Begrenzungsfläche verteilt - angeordnet, dass das erste Fluid F1 im Betrieb gleichmäßig verteilt konzentrisch um die Zentrumsachse Z aus dem Verteiler 1 in das zweite Fluid F2 austritt. Durch das Austreten des ersten Fluids F1 in das zweite Fluid F2 wird eine Mischung F3 aus erstem Fluid F1 und zweitem Fluid F2 gebildet. Der Verteiler 1 umfasst gemäß der Erfindung eine Durchtrittsöffnung 6 oder - wie im gezeigten Ausführungsbeispiel - mehrere Durchtrittsöffnungen 6 für das zweite Fluid F2. Die Durchtrittsöffnungen 6 sind derart dimensioniert und angeordnet, dass das zweite Fluid F2 im Betrieb gleichmäßig verteilt konzentrisch um die Zentrumsachse Z strömt.

Das zweite Fluid F2 durchströmt dabei den Verteiler 1. Hellgrau getönt ist in Figur 2 das erste Fluid dargestellt. Es strömt durch den Einlass 2 in den Kanal 3 und vom Kanal 3 aus in Auslässe 4. Über Austrittsöffnungen 5 tritt das erste Fluid F1 in das zweite Fluid F2 ein, wobei eine Mischung F3 aus erstem Fluid F1 und zweitem Fluid F2 gebildet wird. Der Verteiler 1 gemäß der Erfindung ist damit ein dynamischer Mischer.

Der Verteiler 1 weist dabei in seinem radial von der Zentrumsachse entfernten äußeren Bereich einen Distanzbereich 9 auf. Dieser Distanzbereich legt zum einen den Abstand der äußersten Wand der äußersten Austrittsöffnungen 5 von der Innenwand der Rohrleitung 21 fest. Damit ermöglicht der Verteiler 1 mit dem Distanzbereich 9 einen verbesserten Korrosionsschutz der Rohrleitung 21 durch Vermeiden des Kontaktes der Rohrleitung mit reinem ersten Fluid F1. Vielmehr kommt die Rohrleitung 21 im Wesentlichen nur mit zweitem Fluid F2 beziehungsweise der Mischung F3 in Kontakt. Es erfolgt daher bei einem Einsatz des Verteilers im Rahmen der Schwefelsäuresynthese daher eine Trennung zwischen der Rohrwand und dem eigentlichen Verteilerring mit Hilfe des Distanzbereiches 9, so dass die Wand nicht mit Wasser in Kontakt kommt. Anders ist dies bei bekannten Vorrichtungen wie beispielsweise den in Figur 1 dargestellten, dort ist eine separate Umlenkkammer erforderlich.

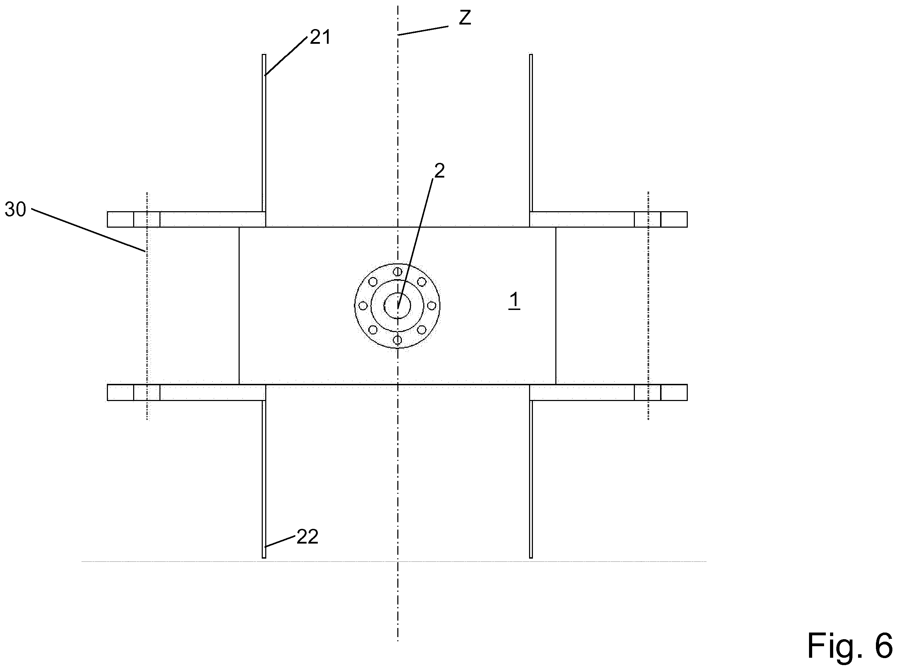

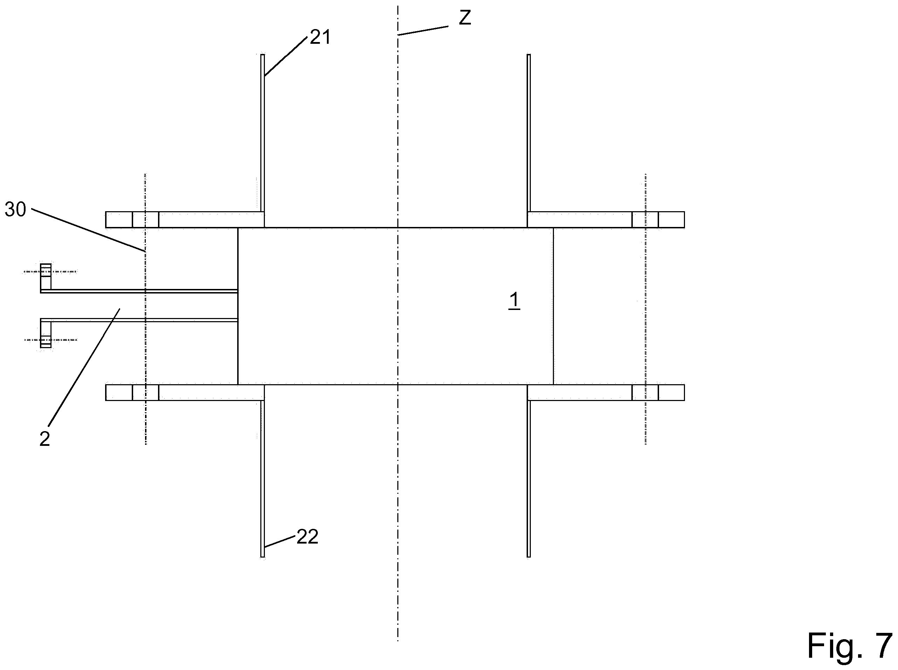

Zum anderen kann der äußere Bereich 13 des Verteilers 1 beziehungsweise des Distanzbereiches 9 zur kraftschlüssigen Verbindung des Verteilers mit den Rohrleitungen 21, 22 im Rahmen einer Flanschverbindung 30 genutzt werden. Dies wird unten in Bezug auf die Figuren 6 und 7 näher erläutert.

Infolge der Durchtrittsöffnungen 6 für das zweite Fluid F2 kann im Rahmen der Erfindung durch deren Abmessungen und Positionierung auch die Wirkung eines statischen Mischers durch den Verteiler 1 erzielt werden, indem der Strömung des zweiten Fluids F2 alleine durch die Durchtrittsöffnungen Störungen aufgeprägt werden, die zu einer Durchmischung des Fluids führen. Werden mehrere, auch unterschiedliche Verteiler 1 gemäß der Erfindung in Reihe geschaltet verwendet, kann die effiziente Durchmischung der Fluide noch gesteigert werden.

In der Darstellung in Figur 2 wird durch die schraffiert dargestellten Schnittflächen eine Schnittebene definiert. Aus dieser Schnittebene heraustretend ist hellgrau getönt der Kanal 3 in dem aufgrund des Schnittes nicht dargestellten Teils des Verteilers 1 durch die Wiedergabe des Raumes angedeutet, welcher im Betrieb des Verteilers 1 in dessen Innerem vom ersten Fluid F1 eingenommen wird.

Der Kanal 3 umfasst im gezeigten Ausführungsbeispiel drei konzentrisch in Ringen um die Zentrumsachse Z verlaufende Verteilerarme 11. Die ringsegmentförmigen Verteilerarme 11 stehen dabei über vier Verbindungsarme 12 miteinander in Verbindung. Die Verbindungsarme 12 verlaufen entlang zweier sich rechtwinklig an der Zentrumsachse Z kreuzender Achsen, von denen eine durch die Längsachse durch den Einlass 2 definiert wird. Zwischen den Verbindungsarmen 12 weist der Verteiler 1 somit Verteilersegmente 11 auf, die im gezeigten Beispiel viertelkreisförmige Segmente mit Rechteckquerschnitt sind. Die konzentrisch um die Zentrumsachse Z angeordneten Verteilersegmente 11 haben eine von innen nach außen zunehmende Anzahl an Austrittsöffnungen 5. Auch die Verbindungsarme 12 sind Verteilerkomponenten, welche im gezeigten Ausführungsbeispiel Austrittsöffnungen 5 aufweisen. Alle Austrittsöffnungen 5 des Verteilers 1 münden in die erste Begrenzungsebene 101.

Durch die Verwendung des erfindungsgemäßen Verteilers wird das erste Fluid, beispielsweise Wasser, konzentrisch durch einen konzentrischen Ring oder mehrere konzentrische Ringe, die in die Hauptleitung eingebaut sind, in welcher das zweite Fluid, beispielsweise Schwefelsäure strömt. Es besteht dabei kein Bedarf einer separaten, insbesondere senkrecht zur Hauptleitung angeordneten Mischkammer. Das erste Fluid tritt durch eine Zulaufleitung über den Einlass ein in ein Ringspaltsystem, in dem das erste Fluid gleichmäßig über den Querschnitt der Hauptleitung in die Verteilersegmente beziehungsweise Verteilerarme verteilt wird.

Gemäß der Erfindung kann der Verteiler 1 aus einzelnen Verteilersegmenten beziehungsweise Verteilerkomponenten 11, 12 modulartig zusammengesetzt sein. Insbesondere über Flanschverbindungen können mehrere Verteilerkomponenten 11, 12 lösbar miteinander verbunden werden. Auf diese Weise ist es auch möglich, beispielsweise Anschlüsse für Verteilersegmente 11 an Verteilerarmen 12 vorzusehen, die blind verschlossen werden können. Wird der Verteiler 1 für veränderte Anforderungen im Betrieb benötigt, sollen also beispielsweise höhere Mengen an Fluid F1 eingebracht werden, können an diese vorgehaltenen weiteren Anschlüsse zusätzliche Verteilersegmente 11 in den Verteiler eingesetzt werden. Durch die über die zusätzlichen Verteilersegmente 11 bereitgestellten weiteren Austrittsöffnungen 5 wird die gesamte Austrittsfläche aller Austrittsöffnungen dadurch erhöht.

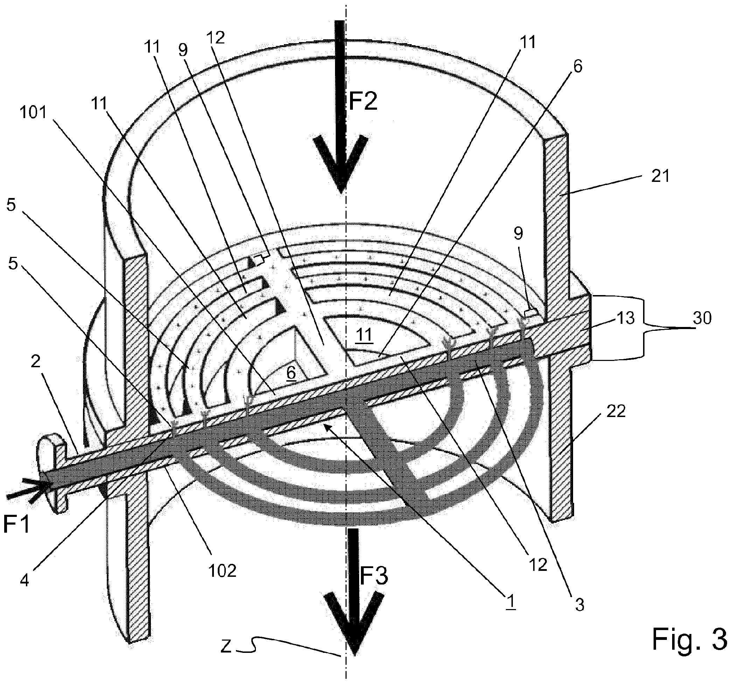

Mit dem Verteiler 1 wird gemäß der in Figur 2 dargestellten Ausführungsform ein dynamischer Mischer in einem durchströmbaren Raum bereitgestellt, über welchen ein zu mischendes Fluid F1 in Strömungsrichtung eines Fluids F2 durch diesen Raum -hier als Rohrleitung ausgebildet - zuführbar ist. In Figur 3 ist eine alternative Anwendung des Verteilers 1 gezeigt. Darin wird ein dynamischer Mischer in einem durchströmbaren Raum bereitgestellt, über welchen ein zu mischendes Fluid F1 entgegen der Strömungsrichtung eines Fluids F2 durch diesen Raum -hier als Rohrleitung ausgebildet - zuführbar ist.

Im Rahmen der Erfindung weist der Verteiler 1 wenigstens eine Durchtrittsöffnung 6 auf, durch welche im Betrieb das zweite Fluid F2 den Verteiler 1 passiert. Durch die Störung seiner Strömung beim Durchtritt durch die Durchtrittsöffnung oder die Durchtrittsöffnungen 6 durch den Verteiler 1 werden die Fluidelemente des Fluids F2 vermischt. In einer vorteilhaften Weiterbildung des Verteilers 1 ist vorgesehen, dass zumindest eine Durchtrittsöffnung 6 innerhalb eines Kreises um die Zentrumsachse Z angeordnet ist, wobei insbesondere die äußere Begrenzung wenigstens einer Durchtrittsöffnung 6 zumindest abschnittsweise von dem Kreis definiert wird. Auf diese Weise wird die Strömung des Fluids F2 beim Durchtritt durch einen, insbesondere konzentrisch, in eine zylindrische Rohrleitung 21, 22 eingebauten Verteiler 1 symmetrisch zur Zentrumsachse geführt, so dass die mechanische Belastung der Wände der Rohrleitung gering gehalten wird. In der beispielsweise in den Figuren 2 und 3 gezeigten Ausführungsformen bilden auf diese Weise die innen gelegenen vier Durchtrittsöffnungen eine kreisförmige Durchtrittsöffnung, welche von den Verbindungsarmen 12 durchkreuzt wird. Jede Durchtrittsöffnung der zusammen innerhalb eines Kreises um die Zentrumsachse liegenden Durchtrittsöffnungen hat dabei eine äußere Begrenzung, die von diesem Kreis definiert wird. In den in den Figuren 2 und 3 dargestellten Ausführungsbeispielen ist auch die entsprechende innere Begrenzung der Durchtrittsöffnungen ein Kreissegment.

Im Rahmen der Erfindung bieten sich verschiedene Mögllichkeiten, in Abstimmung auf das zu erzielende Strömungsverhalten der Fluide F2 und F3 die Anzahl, die Abmessungen und die Anordnung der Durchtrittsöffnungen zu dimensionieren. Beispielsweise können zumindest zwei Durchtrittsöffnungen 6 innerhalb konzentrischer Kreise mit verschiedenen Radien um die Zentrumsachse Z angeordnet sein. In den in den Figuren 2 und 3 gezeigten Beispielen sind jeweils vier Durchtrittsöffnungen 6 in einem Kreis um die Zentrumsachse Z angeordnet, wobei vier Kreise mit unterschiedlichem Radius vorgesehen sind. Insgesamt weist der Verteiler 1 in diesem Beispiel dann 16 Durchtrittsöffnugnen auf.

Die Form der Durchtrittsöffnungen kann ebenfalls in vorteilhafter Weise in Anpassung auf die Strömungsführung für das Fluid F2 gewählt werden. Insbesondere ist dazu vorgesehen, dass zumindest eine Durchtrittsöffnung 6 einen Ausschnitt aus einem Kreisring aus der ersten Begrenzungsfläche 101 und/oder aus der zweiten Begrenzungsfläche 102 ausschneidet.

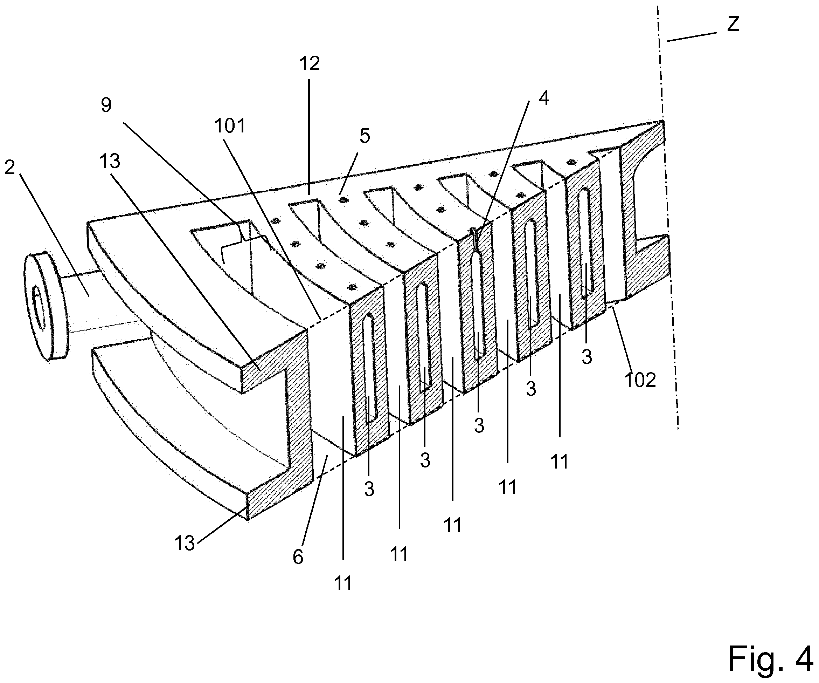

Im gezeigten Beispiel hat der Verteiler 1 auf der in Figur 4 nach oben zeigenden Fläche eine ebene Oberfläche, welche in seiner ersten Begrenzungsfläche 101 liegt. Der Verteiler 1 hat zudem eine auf der in Figur 4 nach untern weisenden und daher verdeckten Fläche eine ebene Oberfläche, welche in seiner zweiten Begrenzungsfläche liegt.

In das den Verteiler 1 durchströmende Fluid F2 wird das Fluid F1 zudosiert. Dieses tritt nach der Passage des Vertreilers 1 über die Austrittsöffnungen 5 in das Fluid F2 ein. Die Strömungsgeschwindigkeit und die Strömungsrichtung des Fluids F1 beim Verlassen der Austrittsöffnung 5 sind Parameter, die die Mischcharakteristik der Fluide F1 und F2 beim Einsatz des Verteilers 1 mitbestimmen. Das Fluid F1 wird dabei über den Kanal 3 des Verteilers 1 den Austrittsöffnungen 5 zugeführt.

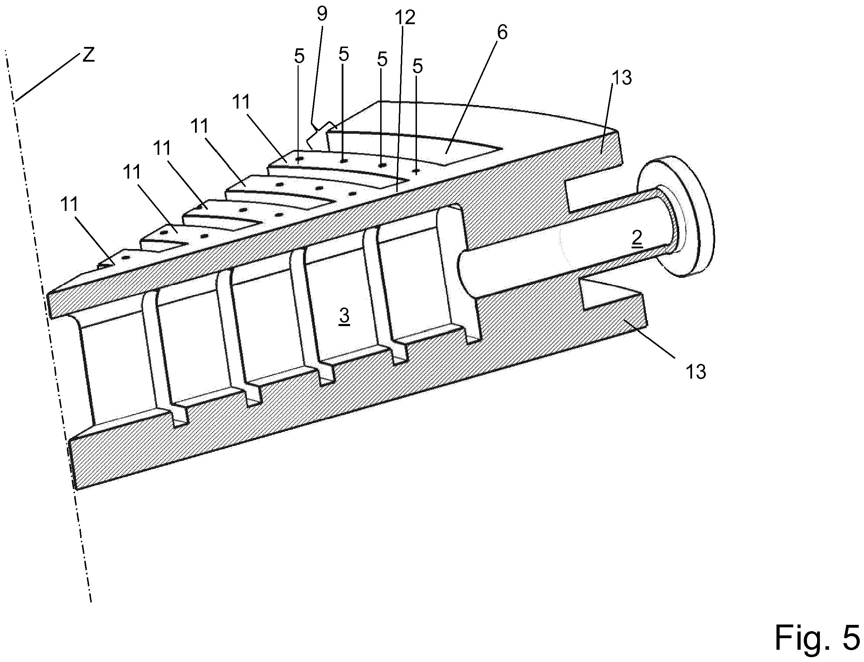

Der Kanal 3 kann auch als Kanalsystem angesehen werden, welches sich ausgehende von der Zuleitung im Einlass 2 in die Leitungen verzweigt, welche innerhalb der Verbindungsarme 12 und Verteilersegmente 11 angeordnet sind. In Figur 4 und Figur 5 ist die relative Anordnung der innerhalb der Verteilersegmente 11 verlaufenden Bereiche des Kanals 3 und der Austrittsöffnungen 5 ersichtlich. Zwischen den Verteilersegmenten 11 sind die Durchtrittsöffnungen 6 vorgesehen.

Der Kanal 3 kann sich innerhalb des Verteilers weiten und/oder (wieder) verengen. Insbesondere kann der Kanal im inneren der Verbindungsarme 12 einen relativ großen Querschnitt aufweisen, während die in die Verteilersegmente 11 abzweigenden Arme des Kanals 3 einen vergleichsweise kleinen Querschnitt haben. Eine derartige Gestaltung der Geometrie des Kanals 3 ist in Figur 5 dargestellt.

Ebenfalls ist in Figur 5 erkennbar, dass die Zuführung 2 so weit in Richtung der Zentrumsachse Z in den Verteiler 1 hineinragt und die Austrittsöffnungen 5 in dem in einer Richtung gesehen von der Zentrumsachse aus gesehen von der Zentrumsachse Z entfernten Austrittsbereich durch den Distanzbereich 9 vom äußeren Rand des Verteilers entfernt positioniert sind. Je nach Anwendungsfall wird der Fachmann den Distanzbereich in seiner Erstreckung radial von der Zentrumsache Z aus derart bemessen, dass im Betrieb des Verteilers der Kontakt der Wandung des Anlagenteils, in das der Verteiler 1 eingebaut ist, mit dem ersten Fluid weitestgehend und insbesondere vollständig unterbleibt. Bei der Darstellung gemäß Figur 5 kann der Vorsprung 13 am Verteiler 1 für eine Flanschverbindung mit einer Rohrleitung verwendet werden. In Figur 2 und Figur 3 ist eine derartige Verbindung dargestellt. Dabei sind (nicht in den Figuren zu sehen) in bekannter Weise Durchgangsbohrungen vorhanden, durch welche die beiden Rohre 21 und 22 mit dem Verteiler 1 dazwischen in einer Flanschverbindung 30 verbunden werden.

In einer weiteren Ausführungsform bietet die Erfindung eine Alternative zu einer derartigen Verbindung des Verteilers 1 mit der Rohrleitung 21,22 über einen Flansch 30. Dazu ist der Verteiler 1 als eine Art Steckscheibe ausgebildet. Diese Ausführungsform ist in den Figuren 6 und 7 illustriert. Die Rohre 21 und 22 sind miteinander über eine Flanschverbindung 30 verbunden. Das Bezugszeichen 30 wurde der Übersichtlichkeit halber an der Position einer Schraube dieser Flanschverbindung markiert. Der Verteiler 1 ist wie eine Dichtung zwischen den Rohren positioniert, ohne mit diesen verschraubt zu sein. Der Verteiler ist damit rein kraftschlüssig im Rahmen des Aufeinanderpressens der Rohre 21, 22 gehalten. Der Verteiler ist sozusagen als Steckscheibe zwischen den Flanschen der Rohre 21, 22 eingeklemmt.

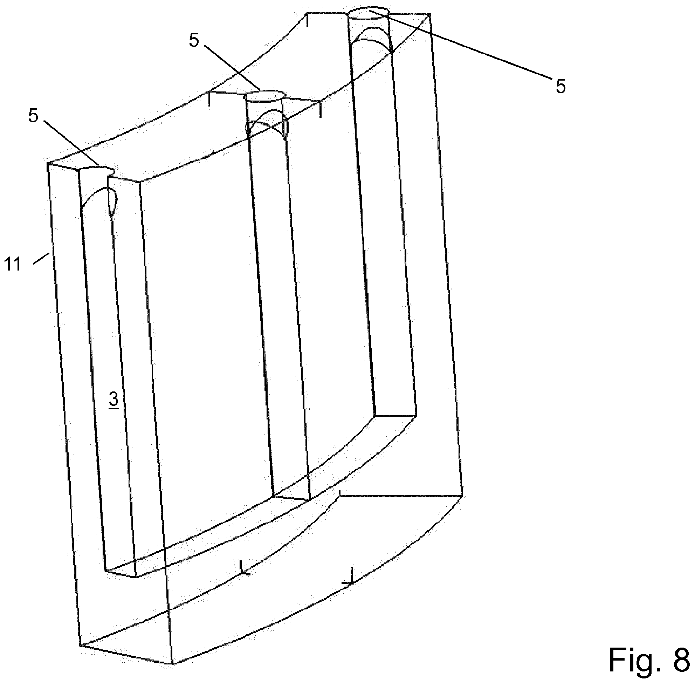

Die Formgebung der Querschnittsfläche des Kanals 3 innerhalb eines Verteilersegments 11 ist im Rahmen der Erfindung ebenfalls variabel an unterschiedliche Anforderungen anpassbar. Varianten dazu werden in den Figuren 8, 9 und 10 dargestellt.

In Figur 8 ist in einer offenen perspektivischen schematischen Darstellung ein Ausschnitt aus einem Verteilersegment 11 gezeigt. Der Kanal 3 weist in dieser Ausführungsform zumindest abschnittsweise an seiner der ersten Begrenzungsfläche 101 zugewandten Seite in einer Ebene parallel zur und insbesondere durch die Zentrumsachse gesehen ein abgerundetes Profil aufweist. Des Gleichen kann der Kanal im Rahmen der Erfindung an seiner der zweiten Begrenzungsfläche 102 zugewandten Seite in einer Ebene parallel zur und insbesondere durch die Zentrumsachse gesehen ein abgerundetes Profil aufweisen. Ebenso kann der Kanal an seiner der ersten Begrenzungsfläche 101 und an seiner der zweiten Begrenzungsfläche 102 zugewandten Seite in einer Ebene parallel zur und insbesondere durch die Zentrumsachse gesehen ein abgerundetes Profil aufweisen.

Dabei öffnet sich der Kanal über Durchgangslöcher in Austrittsöffnungen 5, wobei die Austrittsöffnungen und die Durchgangslöcher einen Durchmesser haben, welcher der Kanalbreite entspricht.

Die sich dadurch bildenden Auslässe 4 zwischen dem Kanal 3 und den Austrittsöffnungen 5 sind gegenüber der Kanalbreite weder eingeschnürt noch erweitert. Im Rahmen der Erfindung kann aber die Geometrie derartiger Durchgangslöcher beziehungsweise Auslässe 4 im Hinblick auf die Strömungscharakteristik des ersten Fluids F1 im Betrieb des Verteilers 1 vom Fachmann derart gestaltet werden, dass eine optimale Mischwirkung mit dem zweiten Fluid F2 für die jeweils zu erfüllenden Prozessanforderungen erreicht wird. Dazu kann ein Auslass 4 insbesondere enger als der Kanal 3 oder weiter als der Kanal 3 sein oder auch eine von der Kreisform verschiedene Querschnitt in der vom Fluid F1 durchströmten Richtung haben.

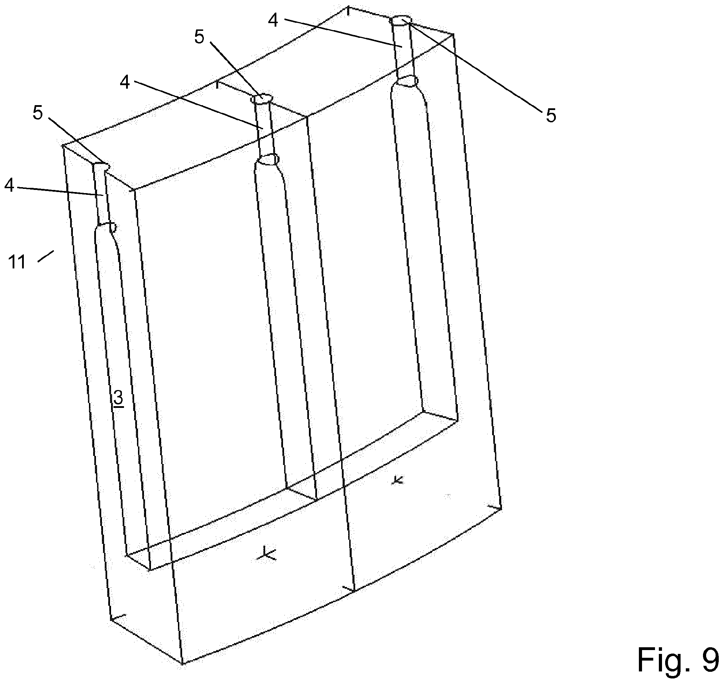

In Figur 9 ist in einer offenen perspektivischen schematischen Darstellung ein Ausschnitt aus einem Verteilersegment 11 gezeigt, bei welchem die Durchgangslöcher als Auslässe 4 einen geringeren Durchmesser als die Kanalbreite haben. Damit wird die Strömungsgeschwindigkeit des Fluids F1 beim Verlassen des Verteilersegments 11 durch die Austrittslöcher 5 im Vergleich zu der in Figur 8 dargestellten Ausführungsform erhöht.

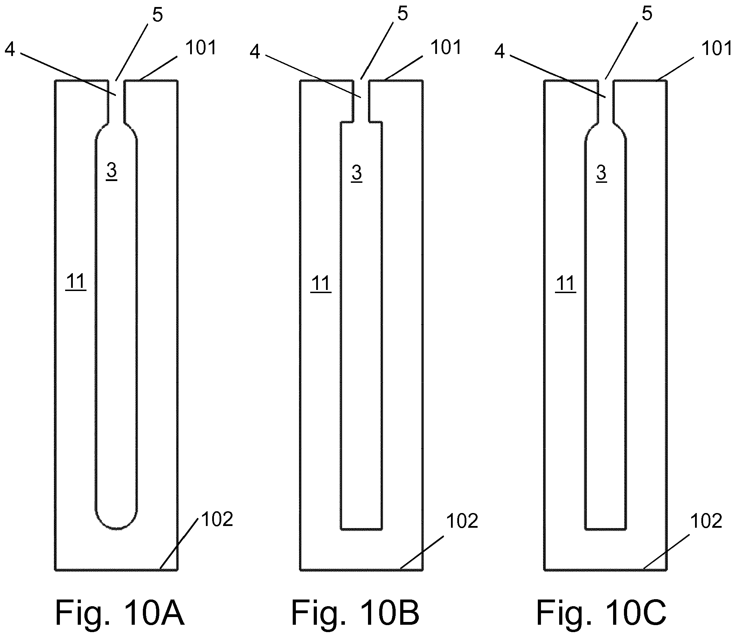

Die in Figur 9 dargestellte Ausführungsform entspricht im Prinzip der in Figur 10C gezeigten Variante für Beispiele möglicher Gestaltungen des Kanalquerschnitts. An seiner der zweiten Begrenzungsfläche 102 zugewandten Seite in einer Ebene parallel zur und insbesondere durch die Zentrumsachse gesehen weist der Kanal 3 ein abgerundetes Profil auf. In der in Figur 10A dargestellten Ausführungsform weist der Kanal 3 ein solches abgerundetes Profil auch an seiner der ersten Begrenzungsfläche 101 zugewandten Seite auf. Ebenso kann im Rahmen der Erfindung, wie in Figur 10B dargestellt, der Kanal auch ein Rechteckprofil aufweisen.

Je nach Strömungsverhalten des ersten Fluids und Prozessanforderungen wird der Fachmann die Abmessungen und die Formgebung des Kanals, der Durchgangslöcher beziehungsweise Auslässe 4 und der Austrittsöffnungen 5 festlegen. Dabei werden der konstruktive und finanzielle Aufwand für die Fertigung des Verteilersegments abgewogen gegen das erzielbare Strömungsprofil des ersten Fluids.

Im Rahmen der Erfindung kann der Verteiler 1 des Weiteren aus zumindest zwei Verteilersegmenten 11 zusammengesetzt sein. Diese Verteilersegmente können sich in ihrer äußeren und oder inneren Gestaltung unterscheiden. Damit bietet die Erfindung die Möglichkeit, flexibel auf sich ändernde Mischaufgaben reagieren zu können.

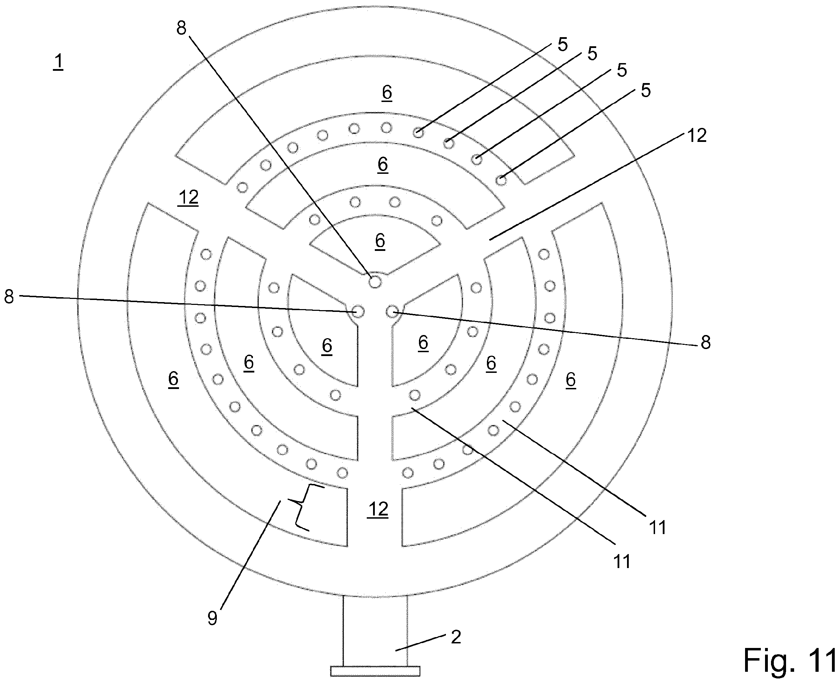

Aus dem Kanal 3 tritt das erste Fluid F1 über Austrittsöffnungen 5 in das zweite Fluid F2 ein, wobei in einer vorteilhaften Weiterbildung der Erfindung - neben den Verteilersegmenten 11 - auch ein Verbindungsarm 12 zumindest eine Austrittsöffnung 5 aufweisen kann. Insbesondere kann eine oder können mehrere Austrittsöffnungen 5 in dem Bereich angeordnet sein, in welchem sich Verbindungsarme 12 treffen. Diese Variante ist in Aufsicht in Figur 11 dargestellt.

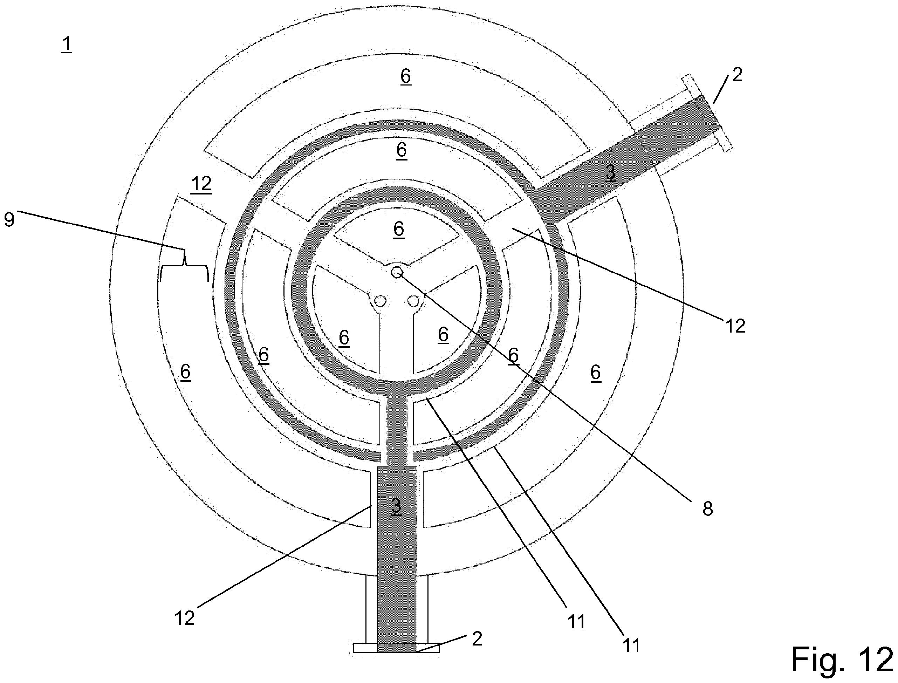

Gemäss der Erfindung wird die Möglichkeit geschaffen, die zugeführte Menge an erstem Fluid sich verändernden Anforderungen im Prozess anzupassen, und dabei dennoch die Strömungsgeschwindigkeit des ersten Fluids F1 beim Eintritt in das zweite Fluid F2 beibehalten zu können. Dazu ist im Rahmen der Erfindung vorgesehen, dass der Verteiler zwei Einlässe 2 aufweist, die jeweils mit nur einem Verteilerring, gebildet aus mit dem jeweiligen Kanal 3 in Verbindung stehenden Verteilersegmenten 11, verbunden sind. Ein derartiger Verteiler 1 ist in Figur 12 in Aufsicht dargestellt. Die beiden separaten Zuläufe ermöglichen bei der Schwefelsäuresynthese beispielsweise, auf einen sinkenden Wasserbedarf zu reagieren, indem eine Zufuhr abgeschaltet und nur noch durch einen der beiden Verteilerringe zudosiert wird. Je nachdem, wie hoch der verbleibende Wasserbedarf ist, wird dafür die Wasserzufuhr in den Verteilerring mit dem größeren oder in denjenigen mit dem kleineren Durchmesser abgeschaltet.

Die in den Figuren 11 und 12 im Bereich des Zentrums des Verteilers vorgesehenen Löcher 8 sind für Ausführungsformen des Verteilers vorgesehen, bei welchen dieser aus einem Ober- und einem Unterteil zusammengesetzt ist. In diesem Fall umfasst der Verteiler 1 zwei Komponenten. Eine erste Komponente ist das Oberteil, welches alle Kanäle und Bohrungen beinhaltet, und eine zweite Komponente ist das Unterteil, welches als Deckel von unten an das Oberteil angesetzt wird, so dass dadurch alle Kanäle des Verteilers geschlossen werden. Mit anderen Worten befindet sich die erste Begrenzungsfläche im Oberteil und die zweite Begrenzungsfläche befindet sich in Unterteil. Die beide Teile werden beispielsweise mit Schraubverbindung aneinander befestigt. Im gezeigten Ausführungsbeispiel sind drei Löcher 8 für eine Schraubverbindung mittels drei durch diese Löcher zu führende Schrauben vorgesehen.

Die in den Figuren 11 und 12 im Bereich des Zentrums des Verteilers vorgesehenen Löcher 8 ermöglichen jedoch auch Anwendungen mit einer Kombination mehrerer Verteiler in Reihe für die Verbindung von der Oberteil und Unterteil der Mischer beziehungsweise vorgesehen. So kann der erfindungsgemäße Mischer als 2-Teiler bzw. Mehrteiler-System zusammengebaut werden.

Wie oben erläutert wurde, weist der Verteiler 1 zumindest einen symmetrisch, insbesondere konzentrisch zur Zentrumsachse Z angeordneten streifenförmigen, insbesondere kreisringförmigen Austrittsbereich auf, in welchem die Austrittsöffnungen 5 für das erste Fluid F1 positioniert sind. Ein Austrittsbereich ist der Bereich, in welchem die Austrittsöffnungen 5 angeordnet sind. Ein Austrittsbereich 7 ist gemeinsam mit dem zugehörigen Kanal 3 in einem Verteilerarm 11 angeordnet. Der Verteiler 1 kann auch zumindest zwei Austrittsbereiche aufweisen, deren Austrittsöffnungen 5 mit jeweils mindestens einem Kanal 3 verbunden sind, wobei jeder Austrittsbereich durch seine Austrittsöffnungen 5 und den damit verbundenen Auslässen 2 und dem Kanal 3 oder den Kanälen 3 mit zumindest einem dem Austrittsbereich 7 zugeordneten Einlass verbunden ist.

In den bisher beschriebenen Ausführungsformen der Erfindung verlaufen die Austrittsbereiche in einer Ebene parallel zu zumindest einer Begrenzungsfläche 101, 102.

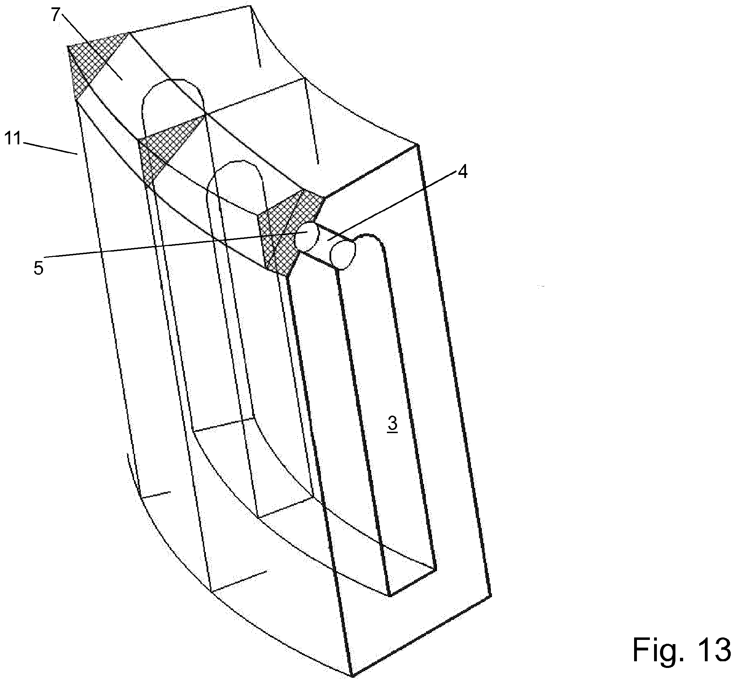

In einer Weiterbildung der Erfindung ist vorgesehen, dass der Austrittsbereich oder mehrere Austrittsbereiche zumindest abschnittsweise wenigstens eine schräg zu der ersten Begrenzungsfläche 101 und/oder zu der zweiten Begrenzungsfläche 102 verlaufende Austrittsfläche 7 aufweist, in welche zumindest eine Austrittsöffnung 5 mündet. In Figur 13 ist ein Abschnitt eines Verteilersegments 11 in einer offenen perspektivischen Ansicht schematisch dargestellt. Das Verteilersegment 11 erstreckt sich zwischen der oberen Begrenzungsfläche 101 und der unteren Begrenzungsfläche 102. Die in der Darstellung in Figur 13 links oben gelegene Außenkante der Begrenzungsfläche 101, also die on der Zentrumsachse Z entfernt liegende Außenkante, ist unter Bildung einer Austrittsfläche 7 abgeschrägt. Die Austrittsöffnungen 5 münden in diese schräg zu der ersten Begrenzungsfläche 101 verlaufende Austrittsfläche 7. Damit kann das erste Fluid F1 im Betrieb schräg in das den Verteiler 1 mit derartigen Verteilersegmenten 11 durchströmende Fluid F2 eintreten.

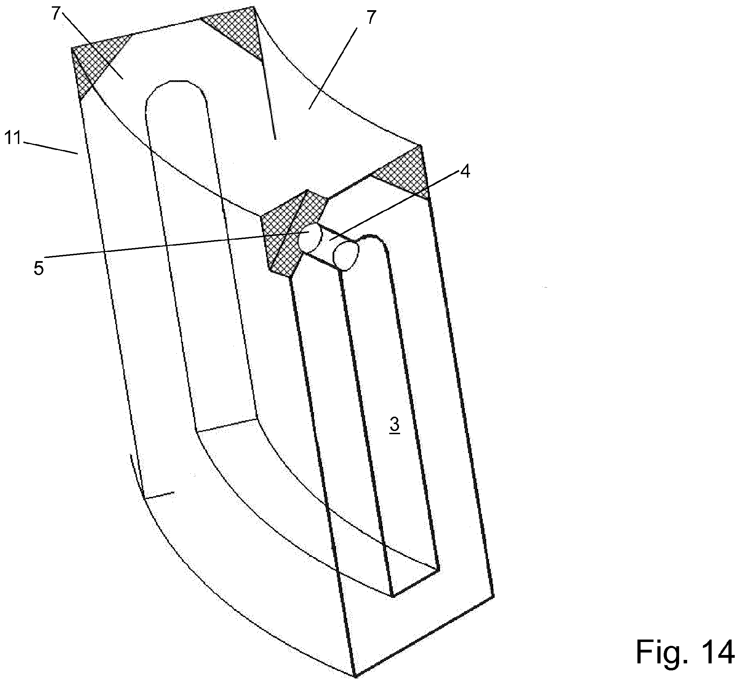

Im Rahmen der Erfindung ist es ebenso möglich, die in der Darstellung in Figur 13 rechts oben gelegene Außenkante der Begrenzungsfläche 101, also die zur Zentrumsachse Z hinweisende Außenkante, unter Bildung einer Austrittsfläche 7 abzuschrägen. In Figur 14 ist eine weitere Ausgestaltung des Austrittsbereiches in einer offenen perspektivischen Ansicht schematisch dargestellt. Beide Außenkanten der oberen Begrenzungsfläche 101 des Verteilersegments 11 sind im Bereich der Öffnungen 5 abgeschrägt. In der besonderen gezeigten Ausführungsform verlaufen die Schrägen symmetrisch zur parallel zur Zentrumsachse Z verlaufenden Längsachse durch das Verteilersegment 11.

In einer Ebene durch die Längsachse des Verteilersegments 11 können im Rahmen der Erfindung zwei oder mehr Austritte vom Kanal in die Austrittflächen 7 verlaufen. Insbesondere können in Bezug auf die Längsachse des Kanals zwei einander gegenüberliegende Austrittsöffnungen 5 vorgesehen sein. So sind in einer Ausführungsform der Erfindung in dem Austrittsbereich oder in mehreren Austrittsbereichen zumindest zwei Austrittsflächen 7 positioniert, von denen eine auf der der Zentrumsachse Z zugewandten Seite des Verteilersegments und die andere auf der von der Zentrumsachse abgewandten Seite des Verteilersegments angeordnet ist. Damit ist eine Austrittsfläche der Zentrumsachse zugewandt und die andere Austrittsfläche von der Zentrumsachse abgewandt.

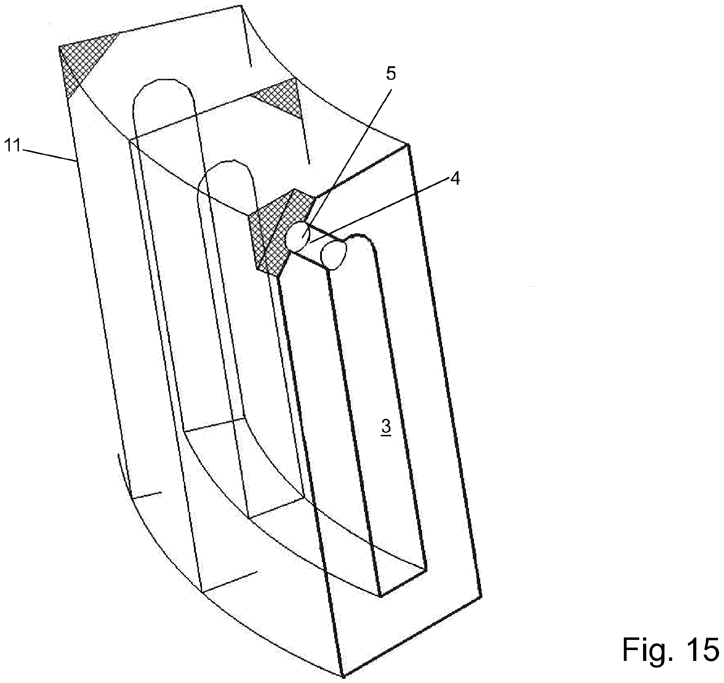

Im Rahmen der Erfindung ist des Weiteren vorgesehen, mehrere Austrittsflächen 7 alternierend auf der der Zentrumsachse zugewandten und auf der von der Zentrumsachse abgewandten Seite anzuordnen. Diese Variante ist in Figur 15 schematisch dargestellt. Außerdem ist es möglich, mehrere Austrittsflächen auf der der Zentrumsachse zugewandten und auf der von der Zentrumsachse abgewandten Seite anzuordnen.

Die Erfindung bietet mit der Wahl der Lage der Austrittsflächen relativ zur Strömungsrichtung des zweiten Fluids F2 beziehungsweise relativ zur Zentrumsachse die Möglichkeit, in einem weiten Bereich die Mischcharakteristik des Verteilers 1 als dynamischen Mischer zu verändern. Abhängig von der Wahl der Anzahl der Austrittsöffnungen 5 und deren jeweiligen Durchmessers sowie ihrer Position und Lage auf einer eventuell schrägen Austrittsfläche prägt das einströmende erste Fluid F1 im Betrieb des Verteilers 1 dem zweiten Fluid und damit der sich ergebenden Mischung F3 aus erstem Fluid F1 und zweitem Fluid F2 ein Strömungsbild auf.

Dieses Strömungsbild ist ein wichtiger Parameter, der mitbestimmt, in welcher Zeit sich die Fluide ausreichend mischen und welche Strömungsstrecke dafür benötigt wird. So können in einer bestehenden Rohrleitung vorgegebener Länge als Teil einer Anlage, beispielsweise zur Schwefelsäuresynthese, unterschiedliche Verteiler je nach Mischaufgabe eingesetzt werden. Der Aufbau der Anlage muss dafür nicht verändert werden, sondern allein durch Austausch des Verteilers kann eine andere Mischaufgabe gelöst werden. Damit bietet die Erfindung eine einfache und besonders kostengünstige Möglichkeit, eine Anlage flexibel betreiben zu können.

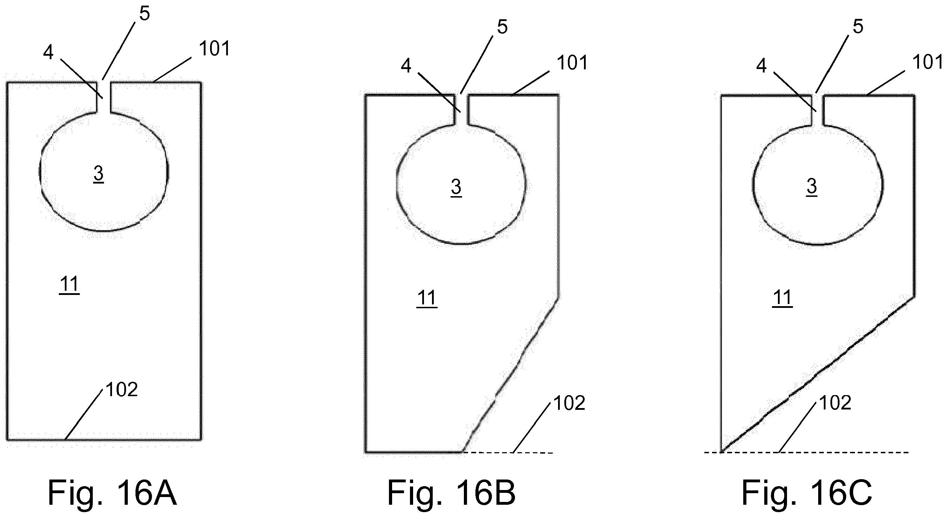

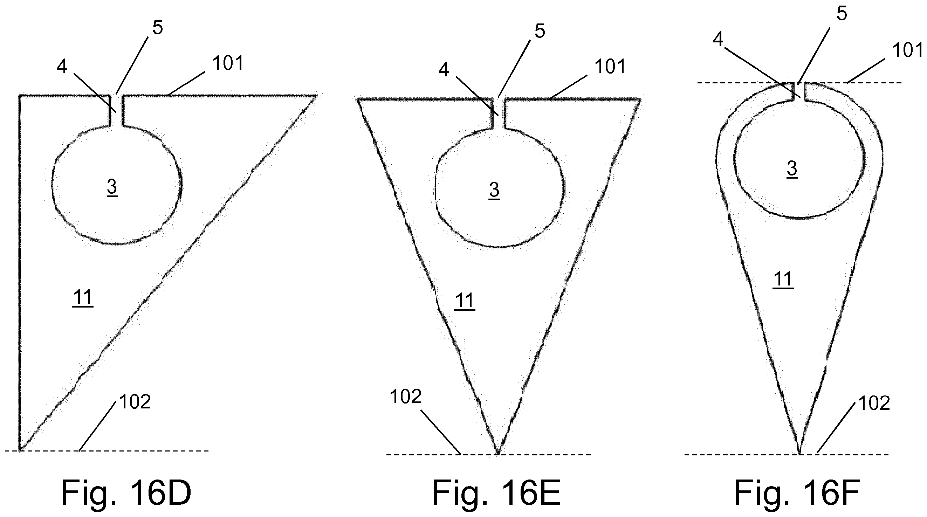

In den oben beschriebenen Ausführungsformen hat der Kanal 3 einen länglichen Querschnitt. Im Rahmen der Erfindung kann der Kanal 3 in einer weiteren Ausführungsform auch zumindest abschnittsweise in einer Ebene parallel zur und insbesondere durch die Zentrumsachse Z gesehen einen runden, insbesondere kreisförmigen Querschnitt aufweisen. Diese Variante ist am Beispiel eines Kreisquerschnitts in Figur 16 dargestellt.

In Figur 16 sind dabei gleichzeitig verschiedene Gestaltungsmöglichkeiten für die äußere Form des Verteilersegments illustriert. Die äußere Gestaltung des Verteilersegments ist ausdrücklich unabhängig von der geometrischen Gestaltung des Kanals.

Der Kanal 3 verläuft in einer einfachen Ausführungsform, welche in Figur 16A gezeigt ist, zumindest abschnittsweise innerhalb eines Verteilersegments 11, dessen äußere Begrenzung in einer Ebene senkrecht zu der Richtung, in welcher das erste Fluid durch den Kanal strömt, im Wesentlichen ein Viereck, insbesondere ein Rechteck ist. Im Hinblick auf die Strömung des zweiten Fluids F2 um und durch den Verteiler kann die äußere Gestaltung der Verteilersegmente verändert werden. In den folgenden Beispielen ist dies an der der zweiten Begrenzungsebene 102 zugewandten Seite des Verteilersegments illustriert. Ebenso kann jedoch gleichzeitig oder alternativ auch die der ersten Begrenzungsebene 101 zugewandte Seite des Verteilersegments entsprechend geformt sein.

Beispielsweise kann die der zweiten Begrenzungsfläche 102 zugewandte Seite des Verteilersegments zumindest abschnittsweise abgeschrägt werden, wie in den Figuren 16B bis 16F gezeigt. Der Kanal kann dadurch zumindest abschnittsweise innerhalb eines Verteilersegments verlaufen, dessen äußere Begrenzung in einer Ebene senkrecht zu der Richtung, in welcher das erste Fluid durch den Kanal strömt, im Wesentlichen ein Fünfeck ist, wie in Figur 16B gezeigt. Dabei ist die Seite des Rechtecks, welche der Austrittsöffnung 5 gegenüber liegt, sozusagen von einer Ecke her angeschnitten und stößt so an eine weitere, schräg und nicht senkrecht zu den übrigen Seiten des Rechtecks verlaufende Fläche.

Je nachdem, wie die Schräge der der zweiten Begrenzungsfläche 102 zugewandten Seite in Bezug auf die Breite des Verteilersegments angeordnet wird, kann dadurch der Kanal 3 zumindest abschnittsweise innerhalb eines Verteilersegments verlaufen, dessen äußere Begrenzung in einer Ebene senkrecht zu der Richtung, in welcher das erste Fluid durch den Kanal strömt, im Wesentlichen ein Dreieck ist, wie in Figur 16D, 16E oder 16F.

Der Kanal 3 kann im Rahmen der Erfindung dabei gleichzeitig oder alternativ zumindest abschnittsweise innerhalb eines Verteilersegments verlaufen, dessen äußere Begrenzung in einer Ebene senkrecht zu der Richtung, in welcher das erste Fluid durch den Kanal strömt, benachbart zu der Austrittsöffnung 5 abgerundet, insbesondere kreisförmig, ausgebildet ist. In Figur 16F ist eine solche Variante gezeigt, bei welcher außerdem das Verteilersegment 11 gegenüber der Austrittsöffnung 5 positioniert eine Spitze aufweist.

In den illustrierten Ausführungsbeispielen ist der Verteiler nach Art einer im Wesentlichen ebenen Scheibe dargestellt. Der Ausdruck "im Wesentlichen eben" berücksichtigt dabei Abweichungen durch die äußere Gestaltung der Verteilerarme und/oder Verbindungsarme, wobei durch die erste und zweite Begrenzungsfläche 101, 102 aber ein eben und senkrecht zur Zentrumsachse verlaufender Raum aufgespannt wird, welcher vom Verteiler ausgefüllt wird.

Im Rahmen der Erfindung kann der Verteiler jedoch auch innerhalb eines Raumes gebildet werden, welcher von Flächen begrenzt wird, die sich radial von der Zentrumsachse aus gesehen zumindest abschnittsweise krümmen und/oder zumindest abschnittsweise ein einem Winkel ungleich 90° beginnend bei der Zentrumsachse von dieser radial nach außen verlaufen. So kann beispielsweise ein sich in der oder gegen die Strömungsrichtung des zweiten Fluids von der Zentrumsachse aus gesehen verbreiternder Verteiler geschaffen werden. Damit stellt die Erfindung einen weiteren Parameter zur Verfügung, mit welchem auf das Strömungsprofil beim Anströmen oder Durchströmen des Verteilers Einfluss genommen werden kann.

Es ist dem Fachmann ersichtlich, dass die Erfindung nicht auf die vorstehend beschriebenen Beispiele beschränkt ist, sondern vielmehr in vielfältiger Weise variiert werden kann. Die Erfindung ist definiert durch die Ansprüche.

### Bezugszeichenliste

- F1: erstes Fluid
- F2: zweites Fluid
- F3: Mischung aus erstem und zweitem Fluid
- 1: Verteiler
- 101: erste Begrenzungsfläche
- 102: zweite Begrenzungsfläche
- Z: Zentrumsachse
- 2: Einlass
- 4: Auslässe
- 5: Austrittsöffnungen
- 7: Austrittsfläche
- 3: Kanal
- 6: Durchtrittsöffnung
- 8: Löcher zur Verbindung mehrerer Verteiler
- 9: Distanzbereich; Distanzring
- 11: Verteilersegment, Verteilerarm, Verteilerkomponente
- 12: Verbindungsarm, Verteilerkomponente
- 21: erstes Rohr
- 22: zweites Rohr
- 13: Vorsprung am Verteiler für Flanschverbindung
- 30: Flanschverbindung

## Patentansprüche

1. Verteiler (1) zum Einbringen eines ersten Fluids (F1) in ein zweites Fluid (F2), insbesondere zum Einbringen einer ersten Flüssigkeit in eine zweite Flüssigkeit, welcher eine erste Begrenzungsfläche (101) und eine von der ersten Begrenzungsfläche beabstandete zweite Begrenzungsfläche (102) aufweist, welche im Wesentlichen parallel zu der ersten Begrenzungsfläche (101) verläuft,
wobei der Verteiler (1) mit Durchgängen versehen ist,
wobei durch die Begrenzungsflächen (101, 102) mittig eine Zentrumsachse (Z) verläuft und der Verteiler (1)
zumindest einen Einlass (2) und zumindest zwei Austrittsöffnungen (5) für das erste Fluid (F1) aufweist sowie
zumindest einen Kanal (3) umfasst, welcher mit dem Einlass (2) und den Austrittsöffnungen (5) verbunden und zwischen der ersten
Begrenzungsfläche (101) und der zweiten Begrenzungsfläche (102) angeordnet ist,
wobei die Austrittsöffnungen (5) derart angeordnet sind, dass das erste Fluid (F1) im Betrieb gleichmäßig verteilt konzentrisch um die Zentrumsachse (Z) aus dem Verteiler (1) in das zweite Fluid (F2) austritt,
wobei der Verteiler (1) zumindest eine Durchtrittsöffnung (6) für das zweite Fluid (F2) umfasst, welche derart dimensioniert und angeordnet ist, dass das zweite Fluid (F2) im Betrieb gleichmäßig verteilt konzentrisch um die Zentrumsachse (Z) strömt **dadurch gekennzeichnet, dass**
der Verteiler (1) zumindest zwei Austrittsbereiche aufweist, deren Austrittsöffnungen (5) mit jeweils mindestens einem Kanal (3) verbunden sind, wobei jeder Austrittsbereich durch seine Austrittsöffnungen (5) und dem Kanal (3) oder den Kanälen (3) mit zumindest einem dem Austrittsbereich zugeordneten Einlass (2) verbunden ist,
**dadurch gekennzeichnet, dass**
der Verteiler (1) als Platte ausgebildet ist.

2. Verteiler (1) nach Anspruch 1
**dadurch gekennzeichnet, dass**
der Verteiler (1) zumindest einen streifenförmigen, insbesondere kreisringförmigen Austrittsbereich, in welchem Austrittsöffnungen (5) für das erste Fluid (F1) positioniert sind,
und zumindest einen Distanzbereich (9) aufweist, wobei der Distanzbereich (9) in einer Richtung gesehen von der Zentrumsachse (Z) aus dem zumindest einen Austrittsbereich nachgeordnet positioniert ist.

3. Verteiler (1) nach Anspruch 2,
**dadurch gekennzeichnet, dass**
der Distanzbereich (9) integraler Bestandteil des Verteilers (1) ist.

4. Verteiler (1) nach einem der vorstehenden Ansprüche, **dadurch gekennzeichnet, dass**
der Verteiler (1) zumindest zwei Auslässe (4) umfasst, wobei ein Auslass (4) den Kanal (3) mit zumindest einer Austrittsöffnung (5) verbindet.

5. Verteiler (1) nach einem der vorstehenden Ansprüche, **dadurch gekennzeichnet, dass**
sich zumindest eine Durchtrittsöffnung (6) in ihrer von zweitem Fluid (F2) durchströmten Richtung parallel zur Zentrumsachse (Z) erstreckt.

6. Verteiler (1) nach einem der vorstehenden Ansprüche, **dadurch gekennzeichnet, dass**
mindestens eine Durchtrittsöffnung (6) innerhalb eines Kreises um die Zentrumsachse (Z) angeordnet ist,
wobei insbesondere die äußere Begrenzung wenigstens einer Durchtrittsöffnung (6) zumindest abschnittsweise von dem Kreis definiert wird.

7. Verteiler (1) nach einem der vorstehenden Ansprüche, **dadurch gekennzeichnet, dass**
zumindest zwei Durchtrittsöffnungen (6) innerhalb konzentrischer Kreise mit verschiedenen Radien um die Zentrumsachse (6) angeordnet sind.

8. Verteiler (1) nach einem der vorstehenden Ansprüche, **dadurch gekennzeichnet, dass**
zumindest eine Durchtrittsöffnung (6) einen Ausschnitt aus einem Kreisring aus der ersten Begrenzungsfläche (101) und/oder aus der zweiten Begrenzungsfläche (102) ausschneidet.

9. Verteiler (1) nach einem der vorstehenden Ansprüche, **dadurch gekennzeichnet, dass**
der Verteiler (1) zumindest einen symmetrisch, insbesondere konzentrisch zur Zentrumsachse (z) angeordneten streifenförmigen, insbesondere kreisringförmigen Austrittsbereich aufweist, in welchem Austrittsöffnungen (5) für das erste Fluid (F1) positioniert sind.

10. Verteiler (1) nach einem der vorstehenden Ansprüche, **dadurch gekennzeichnet, dass**
der Austrittsbereich oder mehrere
Austrittsbereiche zumindest abschnittsweise wenigstens eine schräg zu der ersten Begrenzungsfläche (101) und/oder zu der zweiten Begrenzungsfläche (102) verlaufende Austrittsfläche (7) aufweist, in welche zumindest eine Austrittsöffnung (5) mündet.

11. Verteiler (1) nach einem der vorstehenden Ansprüche, **dadurch gekennzeichnet, dass**
der Verteiler (1) zumindest zwei
Austrittsflächen (7) aufweist, von denen eine der Zentrumsachse (Z) zugewandt ist und die andere von der Zentrumsachse (Z) abgewandt ist.

12. Verteiler (1) einem der vorstehenden Ansprüche,
**dadurch gekennzeichnet, dass**
mehrere Austrittsflächen (7) alternierend auf der der Zentrumsachse (Z) zugewandten Seite eines
Austrittsbereiches und auf der von der
Zentrumsachse (Z) abgewandten Seite des
Austrittsbereiches angeordnet sind.

13. Verteiler (1) einem der vorstehenden Ansprüche,
**dadurch gekennzeichnet, dass**
mehrere Austrittsflächen (7) auf der der Zentrumsachse (Z) zugewandten Seite des Austrittsbereiches und auf der von der Zentrumsachse (Z) abgewandten Seite des Austrittsbereiches angeordnet sind.

14. Verteiler (1) nach einem der vorstehenden Ansprüche, **dadurch gekennzeichnet, dass**
der Kanal (3) zumindest abschnittsweise an seiner der ersten Begrenzungsfläche (101) und/oder an seiner der zweiten Begrenzungsfläche (102) zugewandten Seite in einer Ebene parallel zur und insbesondere durch die Zentrumsachse (Z) gesehen ein abgerundetes Profil aufweist.

15. Verteiler (1) nach einem der vorstehenden Ansprüche, **dadurch gekennzeichnet, dass**
der Kanal (3) zumindest abschnittsweise in einer Ebene parallel zur und insbesondere durch die Zentrumsachse (Z) gesehen einen runden, insbesondere kreisförmigen Querschnitt aufweist.

16. Verteiler (1) nach einem der vorstehenden Ansprüche, **dadurch gekennzeichnet, dass**
der Verteiler (1) aus zumindest zwei Verteilersegmenten (11) zusammengesetzt ist.

17. Verteiler (1) nach einem der vorstehenden Ansprüche, **dadurch gekennzeichnet, dass**
der Kanal (3) zumindest abschnittsweise innerhalb eines Verteilersegments (11, 12) verläuft, dessen äußere Begrenzung in einer Ebene senkrecht zu der Richtung, in welcher das erste Fluid durch den Kanal strömt, im Wesentlichen ein Viereck, insbesondere ein Rechteck ist.

18. Verteiler (1) nach einem der vorstehenden Ansprüche, **dadurch gekennzeichnet, dass**
der Kanal zumindest abschnittsweise innerhalb eines Verteilersegments (11, 12) verläuft, dessen äußere Begrenzung in einer Ebene senkrecht zu der Richtung, in welcher das erste Fluid durch den Kanal strömt, im Wesentlichen ein Dreieck ist.

19. Verteiler (1) nach einem der vorstehenden Ansprüche, **dadurch gekennzeichnet, dass**
der Kanal (3) zumindest abschnittsweise innerhalb eines Verteilersegments (11, 12) verläuft, dessen äußere Begrenzung in einer Ebene senkrecht zu der Richtung, in welcher das erste Fluid durch den Kanal strömt, im Wesentlichen ein Fünfeck ist.

20. Verteiler (1) nach einem der vorstehenden Ansprüche, **dadurch gekennzeichnet, dass**
der Kanal (3) zumindest abschnittsweise innerhalb eines Verteilersegments (11, 12) verläuft, dessen äußere Begrenzung in einer Ebene senkrecht zu der Richtung, in welcher das erste Fluid durch den Kanal strömt, benachbart zu der Austrittsöffnung abgerundet, insbesondere kreisförmig, ausgebildet ist und gegenüber der Austrittsöffnung positioniert eine Spitze aufweist.

21. Verfahren zum Mischen eines ersten Fluids (F1), nämlich Wasser, mit einem zweiten Fluid (F2), nämlich Schwefelsäure,
wobei das zweite Fluid entlang einer Strömungsrichtung strömt, welche eine Zentrumsachse (Z) definiert,
**dadurch gekennzeichnet, dass**
das erste Fluid parallel zur Zentrumsachse in das strömende zweite Fluid durch einen Verteiler (1) nach einem der vorstehenden Ansprüche zugegeben wird und im Betrieb gleichmäßig verteilt konzentrisch um die Zentrumsachse (Z) strömt,
wobei eine Mischung aus dem ersten Fluid (F1) und dem zweiten Fluid (F2) entsteht.

22. Verfahren nach Anspruch 21,
**dadurch gekennzeichnet, dass**
das erste Fluid dem zweiten Fluid im Wesentlichen in derselben Strömungsrichtung oder im Wesentlichen in entgegengesetzter Strömungsrichtung zugegeben wird.

23. Verwendung einer Vorrichtung nach einem der Ansprüche 1 bis 20 und/oder eines Verfahrens nach einem der Ansprüche 21 bis 22 bei der Schwefelsäureherstellung.

## Claims

1. A distributor (1) for introducing a first fluid (F1) into a second fluid (F2), in particular for introducing a first liquid into a second liquid,
having a first delimiting surface (101) and a second delimiting surface (102) spaced apart from said first delimiting surface and extending substantially parallel to the first delimiting surface (101), the distributor being provided with passages;
wherein a center axis (Z) extends centrally through said delimiting surfaces (101, 102); and wherein the distributor (1) comprises
at least one inlet (2) and at least two exit openings (5) for the first fluid (F1); and at least one channel (3) in communication with said inlet (2) and said exit openings (5) and located between the first delimiting surface (101) and the second delimiting surface (102);
wherein the exit openings (5) are arranged such that, in operation, the first fluid (F1) exits from the distributor (1) into the second fluid (F2) in a uniformly distributed manner concentrically about the center axis (Z);
wherein the distributor (1) comprises at least one passage opening (6) for the second fluid (F2), which is dimensioned and arranged such that, in operation, the second fluid (F2) concentrically flows around the center axis (Z) in a uniformly distributed manner;
wherein the distributor (1) has at least two outlet areas with exit openings (5) that are in communication with at least one channel (3), wherein each outlet area is in communication with an inlet (2) associated with said outlet area via its exit openings (5) and said channel (3) or said channels (3),
**characterized in that**
the distributor (1) is in the form of a plate.

2. The distributor (1) of claim 1, wherein
the distributor (1) comprises at least one strip-shaped, in particular circular annular outlet area with exit openings (5) for the first fluid (F1) positioned therein; and
at least one spacer portion (9);
wherein the spacer portion (9) is positioned downstream of the at least one outlet area, as seen in a direction from the center axis (Z).

3. The distributor (1) of claim 2, wherein
the spacer portion (9) is an integral part of the distributor (1).

4. The distributor (1) as claimed in any of the preceding claims, wherein
the distributor (1) comprises at least two outlets (4), wherein one outlet (4) connects the channel (3) with at least one exit opening (5).

5. The distributor (1) as claimed in any of the preceding claims, wherein
at least one passage opening (6) extends parallel to the center axis (Z) in its direction along which the second fluid (F2) flows therethrough.

6. The distributor (1) as claimed in any of the preceding claims, wherein
at least one passage opening (6) is arranged inside a circle about the center axis (Z);
wherein in particular the outer boundary of at least one passage opening (6) is at least partially defined by said circle.

7. The distributor (1) as claimed in any of the preceding claims, wherein
at least two passage openings (6) are arranged inside concentric circles of different radii about the center axis (6).

8. The distributor (1) as claimed in any of the preceding claims, wherein
at least one passage opening (6) cuts out a circular ring section from the first delimiting surface (101) and/or from the second delimiting surface (102).

9. The distributor (1) as claimed in any of the preceding claims, wherein
the distributor (1) comprises at least one strip-shaped, in particular circular annular outlet area arranged symmetrically, in particular concentrically with respect to the center axis (z), with exit openings (5) for the first fluid (F1) positioned therein.

10. The distributor (1) as claimed in any of the preceding claims, wherein
the outlet area or a plurality of outlet areas have, at least in sections thereof, at least one exit surface (7) into which at least one exit opening (5) opens, which exit surface extends obliquely to the first delimiting surface (101) and/or to the second delimiting surface (102).

11. The distributor (1) as claimed in any of the preceding claims, wherein
the distributor (1) has at least two exit surfaces (7), one of which faces the center axis (Z) and the other one facing away from the center axis (Z).

12. The distributor (1) as claimed in any of the preceding claims, wherein
a plurality of exit surfaces (7) are arranged alternately on a side of an outlet area facing the center axis (Z) and on a side of the outlet area facing away from the center axis (Z).

13. The distributor (1) as claimed in any of the preceding claims, wherein
a plurality of exit surfaces (7) are arranged on the side of the outlet area facing the center axis (Z) and on the side of the outlet area facing away from the center axis (Z).

14. The distributor (1) as claimed in any of the preceding claims, wherein
the channel (3) has a rounded profile, at least in sections thereof, on its side facing the first delimiting surface (101) and/or on its side facing the second delimiting surface (102), seen in a plane parallel to and in particular along the center axis (Z).

15. The distributor (1) as claimed in any of the preceding claims, wherein
the channel (3) has a round, in particular circular cross section, at least in sections thereof, seen in a plane parallel to and in particular along the center axis (Z).

16. The distributor (1) as claimed in any of the preceding claims, wherein
the distributor (1) is composed of at least two distributor segments (11).

17. The distributor (1) as claimed in any of the preceding claims, wherein
the channel (3), at least sections thereof, extends within a distributor segment (11, 12) that has an outer contour of substantially quadrangular shape, in particular rectangular shape, in a plane perpendicular to the direction in which the first fluid flows through the channel.

18. The distributor (1) as claimed in any of the preceding claims, wherein
the channel, at least sections thereof, extends within a distributor segment (11, 12) that has an outer contour of substantially triangular shape, in a plane perpendicular to the direction in which the first fluid flows through the channel.

19. The distributor (1) as claimed in any of the preceding claims, wherein
the channel (3), at least sections thereof, extends within a distributor segment (11, 12) that has an outer contour of substantially pentagonal shape, in a plane perpendicular to the direction in which the first fluid flows through the channel.

20. The distributor (1) as claimed in any of the preceding claims, wherein
the channel (3), at least sections thereof, extends within a distributor segment (11, 12) that has a rounded, in particular circular outer contour adjacent to the exit opening, and that has a tip opposite the exit opening, seen in a plane perpendicular to the direction in which the first fluid flows through the channel.

21. A method for mixing a first fluid (F1), namely water, with a second fluid (F2), namely sulfuric acid;
wherein the second fluid flows along a flow direction defining a center axis (Z);
**characterized in that**
the first fluid is introduced into the flowing second fluid in parallel to the center axis, by means of a distributor (1) according to any one of the preceding claims, so as to flow in an evenly distributed manner concentrically about the center axis (Z);
thereby producing a mixture of the first fluid (F1) and the second fluid (F2).

22. The method according to claim 21, wherein
the first fluid is released into the second fluid in substantially the same flow direction or in substantially the opposite flow direction.

23. Use of a device according to any one of claims 1 to 20 and/or of a method according to any one of claims 21 to 22 in sulfuric acid production.

## Revendications

1. Distributeur (1) permettant l'introduction d'un premier fluide (F1) dans un deuxième fluide (F2), en particulier l'introduction d'un premier liquide dans un deuxième liquide,
lequel présente une première surface de délimitation (101) et une deuxième surface de délimitation (102) espacée de la première surface de délimitation, laquelle passe essentiellement parallèlement à la première surface de délimitation (101),
le distributeur (1) étant doté de passages,
un axe central (Z) passant au milieu à travers les surfaces de délimitation (101, 102) et le distributeur (1) présentant au moins une entrée (2) et au moins deux orifices de sortie (5) pour le premier fluide (F1) et comprenant
au moins un conduit (3) qui est relié à l'entrée (2) et aux orifices de sortie (5) et qui est disposé entre la première surface de délimitation (101) et la deuxième surface de délimitation (102),
les orifices de sortie (5) étant disposés de telle manière à ce que le premier fluide (F1) sorte du distributeur (1) dans le deuxième fluide (F2) de manière régulièrement répartie et concentrique autour de l'axe central (Z) pendant le service, le distributeur (1) comprenant au moins un orifice de passage (6) pour le deuxième fluide (F2),
lequel est dimensionné et disposé de telle manière à ce que le deuxième fluide (F2) coule de manière régulièrement répartie et concentrique autour de l'axe central (Z) pendant le service **caractérisé en ce que**
le distributeur (1) présente au moins deux zones de sortie, dont les orifices de sortie (5) sont respectivement reliés à au moins un conduit (3), chaque zone de sortie étant reliée à au moins une entrée (2) affectée à la zone de sortie par ses orifices de sortie (5) et le conduit (3) ou les conduits (3), **caractérisé en ce que**
le distributeur (1) est conçu sous forme de disque.

2. Distributeur (1) conformément à la revendication 1, **caractérisé en ce que**
le distributeur (1) présente au moins une zone de sortie en forme de bande, en particulier en forme circulaire, dans laquelle des orifices de sortie (5) pour le premier fluide (F1) sont positionnés,
et au moins une plage de distance (9),
la plage de distance (9) étant positionnée en étant subordonnée à au moins d'une zone de sortie, dans une direction vue depuis l'axe central (Z).

3. Distributeur (1) conformément à la revendication 2, **caractérisé en ce que**
la plage de distance (9) fait partie intégrante du distributeur (1) .

4. Distributeur (1) conformément à l'une des revendications précédentes,
**caractérisé en ce que**
le distributeur (1) comprend au moins deux sorties (4), une sortie (4) reliant le conduit (3) à au moins un orifice de sortie (5).

5. Distributeur (1) conformément à l'une des revendications précédentes,
**caractérisé en ce que**
au moins un orifice de passage (6) s'étend parallèlement à l'axe central (Z) dans sa direction traversée par le deuxième fluide (F2) .

6. Distributeur (1) conformément à l'une des revendications précédentes,
**caractérisé en ce que**
au moins un orifice de passage (6) est disposé à l'intérieur d'un cercle autour de l'axe central (Z),
la délimitation extérieure au moins d'un orifice de passage (6) étant en particulier définie, au moins par sections, par le cercle.

7. Distributeur (1) conformément à l'une des revendications précédentes,
**caractérisé en ce que**
au moins deux orifices de passage (6) sont disposés à l'intérieur de cercles concentriques avec des rayons différents autour de l'axe central (Z).

8. Distributeur (1) conformément à l'une des revendications précédentes,
**caractérisé en ce que**
au moins un orifice de passage (6) découpe une encoche d'un anneau circulaire à partir de la première surface de délimitation (101) et/ou de la deuxième surface de délimitation (102) .

9. Distributeur (1) conformément à l'une des revendications précédentes,
**caractérisé en ce que**
le distributeur (1) présente au moins une zone de sortie en forme de bande, en particulier en forme circulaire, disposée symétriquement, en particulier concentriquement par rapport à l'axe central (Z), et dans laquelle des orifices de sortie (5) pour le premier fluide (F1) sont positionnés.

10. Distributeur (1) conformément à l'une des revendications précédentes,
**caractérisé en ce que**
la zone de sortie ou plusieurs zones de sortie présente, au moins par sections, au moins une surface de sortie (7) passant obliquement par rapport à la première surface de délimitation (101) et/ou la deuxième surface de délimitation (102), et dans laquelle débouche au moins un orifice de sortie (5).

11. Distributeur (1) conformément à l'une des revendications précédentes,
**caractérisé en ce que**
le distributeur (1) présente au moins deux zones de sortie (7), dont l'une est orientée vers l'axe central (Z) et l'autre est détournée de l'axe central (Z).

12. Distributeur (1) conformément à l'une des revendications précédentes,
**caractérisé en ce que**
plusieurs zones de sortie (7) sont disposées en alternance sur le côté d'une zone de sortie, orienté vers l'axe central (Z), et sur le côté de la zone de sortie, détourné de l'axe central (Z).

13. Distributeur (1) conformément à l'une des revendications précédentes,
**caractérisé en ce que**
plusieurs zones de sortie (7) sont disposées sur le côté de la zone de sortie, orienté vers l'axe central (Z), et sur le côté de la zone de sortie, détourné de l'axe central (Z).

14. Distributeur (1) conformément à l'une des revendications précédentes,
**caractérisé en ce que**
le conduit (3) présente, au moins par sections, sur son côté orienté vers la première surface de délimitation (101) et/ou sur son côté orienté vers la deuxième surface de délimitation (102), sur un plan parallèle et en particulier vu à travers l'axe central (Z), un profil arrondi.

15. Distributeur (1) conformément à l'une des revendications précédentes,
**caractérisé en ce que**
le conduit (3) présente, au moins par sections, sur un plan parallèle et en particulier vu à travers l'axe central (Z), une section ronde, en particulier de forme circulaire.

16. Distributeur (1) conformément à l'une des revendications précédentes,
**caractérisé en ce que**
le distributeur (1) est composé au moins de deux segments de distributeur (11).

17. Distributeur (1) conformément à l'une des revendications précédentes,
**caractérisé en ce que**
le conduit (3) passe, au moins par sections, à l'intérieur d'un segment de distributeur (11, 12), dont la délimitation extérieure sur un plan perpendiculaire à la direction dans laquelle le premier fluide circule dans le conduit, est essentiellement un carré, en particulier un rectangle.

18. Distributeur (1) conformément à l'une des revendications précédentes,
**caractérisé en ce que**
le conduit passe, au moins par sections, à l'intérieur d'un segment de distributeur (11, 12), dont la délimitation extérieure sur un plan perpendiculaire à la direction dans laquelle le premier fluide circule dans le conduit, est essentiellement un triangle.

19. Distributeur (1) conformément à l'une des revendications précédentes,
**caractérisé en ce que**
le conduit (3) passe, au moins par sections, à l'intérieur d'un segment de distributeur (11, 12), dont la délimitation extérieure sur un plan perpendiculaire à la direction dans laquelle le premier fluide circule dans le conduit, est essentiellement un pentagone.

20. Distributeur (1) conformément à l'une des revendications précédentes,
**caractérisé en ce que**
le conduit (3) passe, au moins par sections, à l'intérieur d'un segment de distributeur (11, 12), dont la délimitation extérieure sur un plan perpendiculaire à la direction dans laquelle le premier fluide circule dans le conduit, est conçue en forme arrondie de manière adjacente à l'orifice de sortie, en particulier circulaire, et présente une pointe, en étant positionné à l'opposé de l'orifice de sortie.

21. Procédé pour le mélange d'un premier fluide (F1) notamment de l'eau, avec un deuxième fluide (F2), notamment l'acide sulfurique,
le deuxième fluide circulant dans un sens d'écoulement qui définit un axe central (Z),
**caractérisé en ce que**
le premier fluide est ajouté dans le deuxième fluide qui s'écoule par un distributeur (1) conformément à l'une des revendications précédentes et s'écoule de manière régulièrement répartie et concentrique autour de l'axe central (Z) pendant le service,
un mélange étant généré à partir du premier fluide (F1) et du deuxième fluide (F2).

22. Procédé conformément à la revendication 21,
**caractérisé en ce que**
le premier fluide est ajouté au deuxième fluide essentiellement dans le même sens d'écoulement ou essentiellement dans le sens d'écoulement opposé.

23. Utilisation d'un dispositif conformément à l'une des revendications 1 à 20 et/ou d'un procédé conformément à l'une des revendications 21 à 22 pour la fabrication de l'acide sulfurique.
